# EUROPÄISCHE PATENTSCHRIFT

(11) **EP 3 362 777 B1**
(45) Veröffentlichungstag und Bekanntmachung des Hinweises auf die Patenterteilung: **22.02.2023**
(21) Anmeldenummer: 15823163.9
(22) Anmeldetag: 23.12.2015
(51) Int. Cl.: G01N 15/14, G01N 15/00, G01N 15/10

(54) **FLIESSZELLE ZUR ANALYSE VON PARTIKELN IN EINER ZU UNTERSUCHENDEN FLÜSSIGKEIT, VERFAHREN UND VERWENDUNG**
FLOW CELL FOR ANALYZING PARTICLES IN A LIQUID TO BE EXAMINED, METHOD AND USE
CELLULE D'ÉCOULEMENT POUR L'ANALYSE DE PARTICULES DANS UN LIQUIDE À EXAMINER, PROCÉDÉ ET UTILISATION

(43) Veröffentlichungstag der Anmeldung: 22.08.2018
(73) Patentinhaber: Siemens Healthcare GmbH, 91052 Erlangen (DE)
(72) Erfinder: HAYDEN, Oliver, 85368 Moosburg (DE); RICHTER, Lukas, 96114 Hirschaid (DE); UGELE, Matthias, 92318 Neumarkt (DE)
(86) Internationale Anmeldenummer: PCT/EP2015/081156
(87) Internationale Veröffentlichungsnummer: WO 2017/108129

(56) Entgegenhaltungen:
- US-A1- 2009 178 716
- US-A1- 2010 009 333
- US-A1- 2013 139 575
- US-A1- 2014 008 307
- US-A1- 2014 147 860
- US-A1- 2014 336 062

## Beschreibung

Die Erfindung betrifft eine Vorrichtung zur Untersuchung von Partikeln in einer zu untersuchenden Flüssigkeit. Weiterhin betrifft die Erfindung eine Vorrichtung zur mikroskopischen Beobachtung von Partikeln in einer zu untersuchenden Flüssigkeit. Zudem betrifft die Erfindung ein Verfahren zur Untersuchung von Partikeln in einer zu untersuchenden Flüssigkeit. Überdies betrifft die Erfindung die Verwendung einer Fließzelle und einer Wellenerzeugungseinrichtung zur piezoakustischen Erzeugung von Schallwellen.

Blut besteht aus mehreren Bestandteilen, die im Blut in unterschiedlichen Konzentrationen vorliegen. Rote Blutkörperchen, auch Erythrozyten genannt, machen 98% des Blutes aus, Blutplättchen, auch Thrombozyten genannt, umfassen hingegen nur 1,9% des Blutes und weiße Blutkörperchen, auch Leukozyten genannt, haben sogar nur einen Anteil von 0,1% am Blut. Wenn man nur die Blutbestandteile mit geringem Anteil, d.h. die Blutplättchen oder die weißen Blutkörperchen untersuchen will, gibt es zwei Möglichkeiten der Vorgehensweise. Entweder detektiert man die bis zu tausendfach häufiger vorhandenen roten Blutkörperchen zusammen mit dem interessierenden Zelltyp, d.h. den Thrombozyten oder den Leukozyten, oder man entfernt vor der Analyse die roten Blutkörperchen, um die interessierenden Bestandteile in der Analyseflüssigkeit entsprechend anzureichern.

Bei der ersten Art der Herangehensweise verlängert sich die Gesamtanalysezeit erheblich, nämlich um einen Faktor entsprechend dem Verhältnis zwischen dem Anteil der roten Blutkörperchen und dem Anteil des zu analysierenden Zelltyps. Außerdem erhöht sich die dabei zu verarbeitende Datenmenge extrem. Bei der zweiten Art der Herangehensweise ist ein Arbeitsgang vor der eigentlichen Analyse notwendig, bei dem die nicht zu analysierenden Bestandteile des Blutes aus der Analyseflüssigkeit entfernt werden. Nur bei der zweiten Vorgehensweise wird eine akzeptable Reduzierung der Analysezeit erreicht. Herkömmliche Analyseverfahren beruhen auf elektrischen Methoden, wie zum Beispiel dem Coulter-Prinzip. Das Prinzip des Coulter-Zählers basiert auf der Messung der Änderung der mittleren elektrischen Leitfähigkeit zwischen zwei Elektroden. Diese tauchen in eine elektrisch leitfähige Flüssigkeit, welche Partikel mit einer zur Flüssigkeit unterschiedlichen Leitfähigkeit enthält. Die bei dem Verfahren verwendete Messeinrichtung umfasst zwei Messkammern. In jeder der beiden Kammern, die durch eine schmale Öffnung voneinander getrennt sind, ist eine Messelektrode angeordnet. Dabei richtet sich die Größe der Öffnung nach der Größe der zu untersuchenden Partikel.

Andere herkömmliche Analyseverfahren beruhen auf optischen Methoden. In diesem Zusammenhang ist die Durchflusszytometrie zu nennen. Dabei werden zu untersuchende Zellen in einer Flüssigkeit, die mit hoher Geschwindigkeit einzeln ein elektrisches Feld oder einen Lichtstrahl passieren, analysiert. Je nach Form, Struktur oder Färbung der Zellen, ergeben sich unterschiedliche Effekte, auf deren Basis die Eigenschaften der jeweiligen Zelle ermittelt werden. Dieses Prinzip wird zum Beispiel bei Hämatologie-Analysegeräten oder Fluoreszenz-Durchflusszytometern verwendet. Bei der Fluoreszenz-Durchflusszytometrie werden mit einem fluoreszierenden Marker versehene Zellen je nach Färbung in unterschiedliche Reagenzgefäße sortiert.

US 2014/0147860 A1 beschreibt akustische Durchflusszytometrie an biologischen Partikeln. Insbesondere offenbart US 2014/0147860 eine Vorrichtung zur Untersuchung von Partikeln in einer zu untersuchenden Flüssigkeit, aufweisend eine Prozessstufe zum Trennen und Positionieren der zu untersuchenden Partikel, welche umfasst:
- eine Fließpassage, durch die die zu untersuchende Flüssigkeit mit einer ersten Flussrate hindurchbewegt wird, mit mindestens einem Einlass, durch den mindestens eine Mantelflüssigkeit mit mindestens einer zweiten Flussrate in die erste Fließpassage strömt, derart, dass die mindestens eine Mantelflüssigkeit mindestens einen Mantelstrom in der Fließpassage ausbildet und die zu untersuchende Flüssigkeit längs zu dem mindestens einen Mantelstrom durch die Fließpassage fließt,
- eine Wellenerzeugungseinrichtung zur piezoakustischen Erzeugung von Schallwellen, welche sich transversal zur Fließrichtung der zu untersuchenden Flüssigkeit durch die Fließpassage ausbreiten und Wellenknoten in einer Beobachtungsebene ausbilden, so dass aufgrund der Druckwirkung der Schallwellen in Transversalrichtung zu untersuchende Partikel der zu untersuchenden Flüssigkeit transversal in die Beobachtungsebene verschoben werden und dort angereichert werden, dass die Beobachtungsebene durch den mindestens einen Mantelstrom verläuft und die zu untersuchenden Partikel in der mindestens einen Mantelflüssigkeit angereichert werden,
wobei die Vorrichtung weiter ein Antriebselement zum Erzeugen der einzelnen Flüsse der mindestens einen Mantelflüssigkeit sowie der zu untersuchenden Flüssigkeit umfasst.

Weiterhin wird auch die Mikroskopie zur Analyse von Blutbestandteilen eingesetzt. Dabei werden beispielsweise Zellen auf einem Objektträger angefärbt und mit einem Mikroskop beobachtet. Es kann ein hoher Durchsatz von zu untersuchenden Zellen erreicht werden, wenn das Anfärben von Zellen mit Fluoreszenzstoffen und eine mikroskopische Beobachtung mit der Durchflusszytometrie kombiniert werden.

Zur Trennung von zu untersuchenden Partikeln in Flüssigkeiten werden auch Methoden mit hochviskosen Mantelflüssigkeiten (im Englischen als "sheath flow" bezeichnet) und piezoakustischer Zelltrennung eingesetzt. Derartige Verfahren sind zum Beispiel in US 2004/0070757 A1, US 2010/0009333 A1, Laurel et al., Chem. Soc. Rev., 2007, 36, 492-506 und A. Nilsson et al., Micro Total Analysis Systems 2002, Kluwer Academic Publishers, Nara, Japan 2002 beschrieben.

Allerdings wurden die genannten Verfahren bisher nicht dafür eingesetzt, schwach konzentrierte Bestandteile von zu untersuchenden Flüssigkeiten anzureichern.

Es ist somit eine Aufgabe der vorliegenden Erfindung, eine verbesserte Vorrichtung und ein entsprechendes Verfahren zur Untersuchung von Partikeln in einer zu untersuchenden Flüssigkeit anzugeben, welche auch zur Analyse von schwach konzentrierten Partikeln in zu untersuchenden Flüssigkeiten geeignet sind.

Diese Aufgabe wird durch eine Vorrichtung zur Untersuchung von Partikeln in einer zu untersuchenden Flüssigkeit gemäß Patentanspruch 1, eine Vorrichtung zur mikroskopischen Beobachtung von Partikeln in einer zu untersuchenden Flüssigkeit gemäß Patenanspruch 11, ein Verfahren zur Untersuchung von Partikeln in einer zu untersuchenden Flüssigkeit gemäß Patentanspruch 13 und eine Verwendung einer Fließzelle und einer Wellenerzeugungseinrichtung zur piezoakustischen Erzeugung von Schallwellen gemäß Patentanspruch 14 gelöst.

Die erfindungsgemäße Vorrichtung zur Untersuchung von Partikeln in einer zu untersuchenden Flüssigkeit weist eine Prozessstufe zum Trennen und Positionieren der zu untersuchenden Partikel auf. Die Prozessstufe umfasst eine Fließpassage, durch die die zu untersuchende Flüssigkeit mit einer ersten Flussrate bewegt wird. Eine solche Fließpassage ist vorzugsweise derart ausgebildet, dass die durch die Fließpassage hindurchfließenden Flüssigkeiten laminar fließen. Hierzu werden geeignete Durchmesser der Fließpassage und die Flussraten bzw. die Fließgeschwindigkeiten der durch die erste Fließpassage hindurchfließenden Flüssigkeiten gewählt. Die Fließpassage kann zum Beispiel durch Verwendung eines Leitungselements oder eines rohrartigen Bauelements, welches vorzugsweise optisch transparent ist, realisiert sein. Als Flussrate soll ein durch einen Querschnitt hindurchfließendes Flüssigkeitsvolumen pro Zeit definiert sein.

Die Fließpassage umfasst mindestens einen Einlass, durch den jeweils mindestens eine Mantelflüssigkeit mit mindestens einer zweiten Flussrate in die Fließpassage strömt, derart, dass die mindestens eine Mantelflüssigkeit mindestens einen Mantelstrom in der Fließpassage ausbildet und die zu untersuchende Flüssigkeit längs zu dem mindestens einen Mantelstrom durch die Fließpassage fließt. Als Mantelstrom soll in diesem Zusammenhang also ein Flüssigkeitsstrom verstanden werden, der einen anderen Flüssigkeitsstrom zumindest in einer Richtung umgibt bzw. auf einer Seite des anderen Flüssigkeitsstroms in dessen Fließrichtung vorbeifließt, wobei der Mantelstrom und der andere Flüssigkeitsstrom in dieselbe Richtung fließen. Der Mantelstrom kann jedoch eine andere Geschwindigkeit und eine andere Flussrate aufweisen als der von ihm umgebene bzw. an seiner Seite fließende andere Flüssigkeitsstrom. Als Mantelstromflüssigkeit, auch Mantelflüssigkeit genannt, werden üblicherweise sogenannte Pufferlösungen verwendet, in denen zu untersuchende Partikel haltbar bleiben bzw. vor Änderungen durch die Trägerflüssigkeit geschützt sind.

Die erfindungsgemäße Vorrichtung zur Untersuchung von Partikeln in einer zu untersuchenden Flüssigkeit umfasst außerdem eine Wellenerzeugungseinrichtung zur piezoakustischen Erzeugung von Schallwellen. Unter einer piezoakustischen Erzeugung von Schallwellen wird die periodische, elektrische Anregung von piezokeramischen Schwingungselementen verstanden. Dabei werden die piezokeramischen Schwingungselemente mit Hilfe eines elektrischen Feldes bzw. einer elektrischen Spannung zu einer mechanischen Schwingung angeregt, durch welche wiederum Schallwellen hervorgerufen werden, die sich in den durch die Fließpassage fließenden Flüssigkeiten ausbreiten. Durch die Anordnung von der Wellenerzeugungseinrichtung gegenüberliegenden Reflexionselementen wird die Ausbildung von stehenden Wellen erreicht. Im einfachsten Fall genügt hierzu beispielsweise die Seitenwand einer Rohrleitung, welche die durch die Fließpassage fließenden Flüssigkeiten umgibt und leitet.

Die mit Hilfe der piezokeramischen Schwingungselemente erzeugten Schallwellen breiten sich transversal zur Fließrichtung der zu untersuchenden Flüssigkeit durch die Fließpassage aus und bilden Wellenknoten in einer Beobachtungsebene aus, so dass aufgrund der Druckwirkung der Schallwellen in Transversalrichtung zu untersuchende Partikel der zu untersuchenden Flüssigkeit in die Beobachtungsebene verschoben werden und dort angereichert werden. Eine Anreicherung der zu untersuchenden Partikel in der Beobachtungsebene wird erreicht, weil bei der Verschiebung der zu untersuchenden Partikel deren spezifisches kinematisches Verhalten unter dem Einfluss von Schallwellen genutzt wird. Beispielsweise werden im Vergleich zu den übrigen Partikeln relativ groß dimensionierte Partikel durch die Schallwellen mit höherer Geschwindigkeit in Querrichtung bewegt als kleinere Partikel. Dieser Geschwindigkeitsunterschied, kann zum Beispiel dazu genutzt werden, dass deutlich mehr größere Partikel in der Beobachtungsebene angereichert werden, als unerwünschte kleinere Partikel.

Die zu untersuchenden Partikel werden in Ausbreitungsrichtung der Schallwellen bis zu den Wellenknoten befördert, wo sie keiner Kraft in Querrichtung mehr ausgesetzt sind und sich daher nur noch in Flussrichtung weiterbewegen. Eine Beobachtungsebene bzw. ein Beobachtungsbereich umfasst einen in Querrichtung zur Flussrichtung eng begrenzten Abschnitt in der Fließpassage, in der mit einer zur Beobachtung der zu untersuchenden Partikel verwendeten optischen Beobachtungseinrichtung Objekte, insbesondere die zu untersuchenden Partikel, scharf beobachtet werden können. Die Ausdehnung des Beobachtungsbereichs in Querrichtung hängt also von der Schärfentiefe der verwendeten optischen Beobachtungseinrichtung ab. Ferner hängt die Position des Beobachtungsbereichs in Querrichtung von der Einstellung und Anordnung der optischen Beobachtungseinrichtung ab.

Bei der Ansteuerung der Einlässe bzw. von Einrichtungen zur Bewegung der Flüssigkeiten ist der Wert der mindestens einen zweiten Flussrate derart gewählt, dass der mindestens eine Mantelstrom einen vorbestimmten Querschnitt aufweist, so dass die Beobachtungsebene bzw. der Beobachtungsbereich durch den mindestens einen Mantelstrom verläuft und die zu untersuchenden Partikel in dem mindestens einen Mantelstrom bzw. der mindestens einen Mantelflüssigkeit angereichert werden. Die Wahl bzw. Steuerung der Flussraten geschieht über eine Steuereinheit, welche Werte für die einzelnen Flussraten vorausberechnet und aufeinander abstimmt und die Antriebselemente zum Erzeugen der einzelnen Flüsse der Mantelflüssigkeiten sowie der zu untersuchenden Flüssigkeit entsprechend den ermittelten Flussraten ansteuert.

Auf diese Weise wird also der Zentralstrom dezentriert, so dass zu untersuchende Partikel bei der Separation aus dem Zentralstrom in einen vorzugsweise hochtransparenten Mantelstrom versetzt werden können und sich dort gleichzeitig in der Beobachtungsebene bzw. dem Beobachtungsbereich befinden. Die so separierten, zu untersuchenden Partikel können dann in dem vorzugsweise hochtransparenten Mantelstrom stromabwärts mit einer entsprechenden Beobachtungseinrichtung leicht beobachtet werden, ohne dass die übrigen Partikel, welche sich in dem Zentralstrom befinden, die Sicht auf die zu untersuchenden Partikel stören oder gar verhindern könnten. Mit Hilfe der erfindungsgemäßen Vorrichtung zur Untersuchung von Partikeln in einer zu untersuchenden Flüssigkeit wird also eine Anreicherung von zu untersuchenden Partikeln in einer Beobachtungsebene erreicht. Zusätzlich wird mit Hilfe der akustischen Wellen auch eine Ausrichtung der zu untersuchenden Partikel entsprechend der Orientierung der Beobachtungsebene erzielt, so dass diese gut beobachtet werden können. Zur Ausrichtung der Partikel wird eine Ausbreitungsrichtung der akustischen Wellen senkrecht zur Beobachtungsebene gewählt. Somit kann auf eine Zugabe von Polymerstoffen zur Ausrichtung der zu untersuchenden Partikel, wie es oft herkömmlich angewandt wird, verzichtet werden oder zumindest die Dauer, für die die zu untersuchenden Partikel den Polymeren zu ihrer Ausrichtung ausgesetzt sind, reduziert werden. Da die genannten Polymerstoffe bei zu lang andauernder Einwirkung auf die zu untersuchenden Partikel deren äußere Gestalt unerwünscht verändern können, ist es besonders vorteilhaft, wenn deren Anwendung eingeschränkt oder gar ganz darauf verzichtet werden kann. Auf diese Weise kann also die Qualität der zu beobachtenden Partikel aufrecht erhalten werden und trotzdem eine optimale Ausrichtung dieser Partikel erreicht werden, so dass sie entsprechend einer Orientierung einer Beobachtungsebene ausgerichtet sind.

Die Tatsache, dass die zu untersuchenden Partikel aus dem Partikelstrom in eine andere Ebene gehoben werden und damit dem Strom der zu untersuchenden Flüssigkeit entzogen sind, so dass die in dem Hauptstrom befindlichen Bestandteile keinen störenden Einfluss auf eine Beobachtung der zu untersuchenden Partikel haben, kann zum Beispiel bei der Untersuchung von Blut dahingehend sehr vorteilhaft sein, dass im Gegensatz zu herkömmlichen Vorgehensweisen zur Untersuchung unverdünntes Blut verwendet werden kann, das eine höhere Viskosität als verdünntes Blut aufweist. Damit aber eignet es sich besonders für laminare Strömungen, wie sie in der beschriebenen erfindungsgemäßen Vorrichtung auftreten. Bei laminaren Strömungen kommt es nicht zur Vermischung der Mantelflüssigkeiten mit dem Zentralstrom, so dass eine Separation von Partikeln aus dem Zentralstrom besonders effektiv durchgeführt werden kann.

Die erfindungsgemäße Vorrichtung zur mikroskopischen Beobachtung von Partikeln in einer zu untersuchenden Flüssigkeit umfasst eine erfindungsgemäße Vorrichtung zur Untersuchung von Partikeln in einer zu untersuchenden Flüssigkeit. Darüber hinaus weist die erfindungsgemäße Vorrichtung zur mikroskopischen Beobachtung von Partikeln in einer zu untersuchenden Flüssigkeit ein Mikroskop auf, welches an einer Längsposition der ersten Fließpassage zur Beobachtung von Partikeln der zu untersuchenden Flüssigkeit in der Beobachtungsebene angeordnet ist. Ein solches Mikroskop kann insbesondere ein optisches Mikroskop sein, es kann aber auch ein Elektronenmikroskop oder ein Mikroskop eines anderen zur Beobachtung von Flüssigkeiten geeigneten Typs sein. Mit dem Mikroskop können beispielsweise einzelne zu untersuchende Partikel identifiziert und gezählt werden. Weiterhin können die zu untersuchenden Partikel mit Hilfe des Mikroskops differenziert bzw. klassifiziert werden. Zum Beispiel können Leukozyten, Thrombozyten und Erythrozyten unterschieden werden. Überdies kann auch eine Einteilung der beobachteten Partikelarten in Unterarten vorgenommen werden. Zum Beispiel können Leukozyten nach fünf verschiedenen Subtypen klassifiziert werden.

Es können auch Details der zu untersuchenden Partikel beobachtet werden. Aufgrund der Separation der zu untersuchenden Partikel und der Verschiebung dieser Partikel in die Beobachtungsebene bzw. den Beobachtungsbereich des Mikroskops kann die Beobachtung auf die zu untersuchenden Partikel beschränkt werden, ohne dass störende Partikel die Sicht behindern würden. Da die störenden Partikeln bei einer Beobachtung einer die zu beobachtenden Partikel enthaltenden Flüssigkeit in dem Beobachtungsbereich nicht oder nur vermindert auftreten, müssen sie nicht zusätzlich begutachtet werden und eventuell verworfen werden, so dass eine Beobachtung und Analyse der die zu beobachtenden Partikel enthaltenden Flüssigkeit deutlich erleichtert ist und aufgrund der geringeren Anzahl der zu überprüfenden Partikel erheblich beschleunigt ist.

Die zu überprüfenden Partikel werden durch die akustische Kraft bzw. die Kraft der Schallwellen gezielt in die Untersuchungsebene bzw. Beobachtungsebene eines Mikroskops verschoben, um diese dort anzureichern bzw. die kleineren Partikel, wie zum Beispiel Erythrozyten oder Thrombozyten gegenüber den großen Partikeln, insbesondere den Leukozyten, abzureichern. Auf diese Weise kann zum Beispiel eine 200-2000-fache Anreicherung von Leukozyten erzielt werden.

Bei dem erfindungsgemäßen Verfahren zur Untersuchung von Partikeln in einer zu untersuchenden Flüssigkeit wird eine zu untersuchende Flüssigkeit mit einer ersten Flussrate durch eine Fließpassage bewegt. Es wird außerdem mindestens eine Mantelflüssigkeit mit mindestens einer zweiten Flussrate durch einen ersten Einlass in die Fließpassage eingebracht, so dass die mindestens eine Mantelflüssigkeit einen ersten Mantelstrom in der Fließpassage ausbildet und die zu untersuchende Flüssigkeit längs dem mindestens einen Mantelstrom durch die Fließpassage fließt. Es werden weiterhin Schallwellen piezoakustisch erzeugt. Die Schallwellen breiten sich transversal bzw. quer zur Fließrichtung der zu untersuchenden Flüssigkeit durch die Fließpassage aus und bilden einen Wellenknoten in einer Beobachtungsebene aus, so dass aufgrund der Druckwirkung der Schallwellen in Transversalrichtung zu untersuchende Partikel der zu untersuchenden Flüssigkeit in die Beobachtungsebene verschoben werden und dort angereichert werden. Dabei wird der Wert der mindestens einen zweiten Flussrate derart gewählt, dass der mindestens eine Mantelstrom einen vorbestimmten Querschnitt aufweist, so dass die Beobachtungsebene durch den mindestens einen Mantelstrom verläuft und die zu untersuchenden Partikel in der mindestens einen Mantelflüssigkeit angereichert werden. Die in die Beobachtungsebene bzw. den Beobachtungsbereich verschobenen zu untersuchenden Partikel können dann mit einer optischen Beobachtungseinheit, wie zum Beispiel ein Mikroskop, leicht beobachtet werden.

Bei der erfindungsgemäßen Verwendung erfolgt eine Verwendung einer Fließzelle und einer Wellenerzeugungseinrichtung zur piezoakustischen Erzeugung von Schallwellen, insbesondere einer erfindungsgemäßen Vorrichtung zur Untersuchung von Partikeln in einer zu untersuchenden Flüssigkeit, zur Separation von Leukozyten aus einer Blutflüssigkeit. Wie bereits erwähnt, tritt bei der herkömmlichen Beobachtung von Leukozyten das Problem auf, dass diese nur in geringer Konzentration im Blut vorliegen. Eine Beobachtung bzw. Untersuchung der Leukozyten ohne deren Separation führt daher dazu, dass dabei auch die roten Blutkörperchen mit berücksichtigt und verworfen werden müssen. Vorteilhaft wird bei der Verwendung der erfindungsgemäßen Vorrichtung der Sachverhalt genutzt, dass sich die weißen Blutkörperchen unter dem Einfluss der Schallwellen schneller bewegen als die anderen Bestandteile des Bluts. Unter Nutzung dieses Sachverhalts können nun in einer vorbeifließenden Blutflüssigkeit mit Hilfe von Schallwellen die weißen Blutkörperchen quer zur Flussrichtung versetzt und separiert werden. Die Beobachtung der im Vergleich zu der gro-ßen Anzahl von roten Blutkörperchen geringen Zahl an separierten weißen Blutkörperchen lässt sich anschließend mit viel geringerem Aufwand durchführen, so dass die Beobachtungszeit vorteilhaft deutlich reduziert ist.

Die wesentlichen Komponenten der erfindungsgemäßen Vorrichtung zur Untersuchung von Partikeln in einer zu untersuchenden Flüssigkeit können zum überwiegenden Teil in Form von Softwarekomponenten ausgebildet sein. Dies betrifft insbesondere Teile der Wellenerzeugungseinrichtung, wie zum Beispiel eine Steuerungseinrichtung zur Steuerung der Erzeugung von Schallwellen. Weiterhin betrifft dies auch Steuerungseinheiten, welche zur Steuerung der Flussraten der über die Einlässe der Fließpassage zufließenden Flüssigkeiten eingesetzt werden.

Grundsätzlich können diese Komponenten aber auch zum Teil, insbesondere wenn es um besonders schnelle Berechnungen geht, in Form von softwareunterstützter Hardware, beispielsweise FPGAs oder dergleichen, realisiert sein. Ebenso können die benötigten Schnittstellen, beispielsweise wenn es nur um eine Übernahme von Daten aus anderen Softwarekomponenten geht, als Softwareschnittstellen ausgebildet sein. Sie können aber auch als hardwaremäßig aufgebaute Schnittstellen ausgebildet sein, die durch geeignete Software angesteuert werden.

Eine weitgehend softwaremäßige Realisierung hat den Vorteil, dass auch schon bisher verwendete Steuereinrichtungen auf einfache Weise durch ein Software-Update nachgerüstet werden können, um auf die erfindungsgemäße Weise zu arbeiten. Insofern wird die Aufgabe auch durch ein entsprechendes Computerprogrammprodukt mit einem Computerprogramm gelöst, welches direkt in eine Speichereinrichtung einer Steuereinrichtung der erfindungsgemäßen Vorrichtung zur Untersuchung von Partikeln in einer zu untersuchenden Flüssigkeit ladbar ist, mit Programmabschnitten, um alle Schritte des erfindungsgemäßen Verfahrens auszuführen, wenn das Programm in der Steuereinrichtung ausgeführt wird. Ein solches Computerprogrammprodukt kann neben dem Computerprogramm gegebenenfalls zusätzliche Bestandteile wie z. B. eine Dokumentation und/oder zusätzliche Komponenten auch Hardware-Komponenten, wie z.B. Hardware-Schlüssel (Dongles etc.) zur Nutzung der Software, umfassen

Zum Transport zur Steuereinrichtung und/oder zur Speicherung an oder in der Steuereinrichtung kann ein computerlesbares Medium, beispielsweise ein Memorystick, eine Festplatte oder ein sonstiger transportabler oder fest eingebauter Datenträger dienen, auf welchem die von einer Rechnereinheit der Steuereinrichtung einlesbaren und ausführbaren Programmabschnitte des Computerprogramms gespeichert sind. Die Rechnereinheit kann z.B. hierzu einen oder mehrere zusammenarbeitende Mikroprozessoren oder dergleichen aufweisen.

Die abhängigen Ansprüche sowie die nachfolgende Beschreibung enthalten jeweils besonders vorteilhafte Ausgestaltungen und Weiterbildungen der Erfindung. Dabei können insbesondere die Ansprüche einer Anspruchskategorie auch analog zu den abhängigen Ansprüchen einer anderen Anspruchskategorie weitergebildet sein. Zudem können im Rahmen der Erfindung die verschiedenen Merkmale unterschiedlicher Ausführungsbeispiele und Ansprüche auch zu neuen Ausführungsbeispielen kombiniert werden.

In einer Ausgestaltung der erfindungsgemäßen Vorrichtung zur Untersuchung von Partikeln in einer zu untersuchenden Flüssigkeit weist die Fließpassage einen ersten Einlass auf, durch den eine erste Mantelflüssigkeit mit einer zweiten Flussrate in die Fließpassage strömt. Weiterhin umfasst die Fließpassage einen dem ersten Einlass gegenüberliegenden zweiten Einlass auf, durch den eine zweite Mantelflüssigkeit mit einer dritten Flussrate in die Fließpassage strömt. Der erste Einlass und der zweite Einlass sind derart gegenüberliegend angeordnet, dass die erste Mantelflüssigkeit einen ersten Mantelstrom in der Fließpassage ausbildet und die zweite Mantelflüssigkeit einen zweiten Mantelstrom in der Fließpassage ausbildet, so dass die zu untersuchende Flüssigkeit zwischen dem ersten Mantelstrom und dem zweiten Mantelstrom durch die Fließpassage fließt. Der Wert der zweiten Flussrate und der dritten Flussrate ist derart gewählt, dass die Mantelströme einen vorbestimmten Querschnitt aufweisen, so dass die Beobachtungsebene durch einen der beiden Mantelströme verläuft. Mit Hilfe der beiden Mantelströme kann eine Position des Zentralstroms der zu untersuchenden Flüssigkeit im Querschnitt der Fließpassage bzw. in Transversalrichtung zur Fließrichtung eingestellt werden. Insbesondere kann damit erreicht werden, dass der Zentralstrom nicht mehr in der Beobachtungsebene fließt, so dass zu untersuchende Partikel aus dem Zentralstrom in die Beobachtungsebene gehoben werden können. Die Verwendung von zwei Mantelströmen erlaubt eine freie Positionierung des Zentralstroms sowie eine größere Flexibilität bei der Wahl der Beobachtungsebene in die die zu untersuchenden Partikel transferiert werden, wo sie mit Hilfe eines Beobachtungsgeräts, wie zum Beispiel ein Mikroskop, beobachtet werden können.

In einer Ausgestaltung der erfindungsgemäßen Vorrichtung zur Untersuchung von Partikeln in einer zu untersuchenden Flüssigkeit ist die Fließpassage derart dimensioniert, dass die durch sie fließenden Flüssigkeiten laminar fließen. Dies kann zum Beispiel dadurch erreicht werden, dass die Fließpassage einen Mikrofluidkanal umfasst. Ob eine laminare Strömung in der Fließpassage vorherrscht, hängt von dem Durchmesser der Fließpassage sowie von der Geschwindigkeit der durch sie hindurch fließenden Flüssigkeiten und deren Viskosität ab. Bei gegebener Flussrate und Viskosität wird also der Durchmesser der Fließpassage entsprechend gewählt, so dass die die Fließpassage passierenden Flüssigkeiten laminar hindurchströmen können. Das Vorliegen einer laminaren Strömung hat den Vorteil, dass in der Fließpassage keine Turbulenzen auftreten, die zu einer unerwünschten Vermischung von Zentralstrom und Mantelstrom führen könnten.

In einer bevorzugten Ausgestaltung der erfindungsgemäßen Vorrichtung zur Untersuchung von Partikeln in einer zu untersuchenden Flüssigkeit umfasst die zu untersuchende Flüssigkeit Blutflüssigkeit. Wie bereits erwähnt, eignet sich die erfindungsgemäße Vorrichtung zur Untersuchung von Partikeln in einer zu untersuchenden Flüssigkeit besonders gut zur Separation und anschließenden Beobachtung von Leukozyten, welche in relativ geringer Konzentration in der Blutflüssigkeit vorkommen.

Bevorzugt wird bei der erfindungsgemäßen Vorrichtung zur Untersuchung von Partikeln in einer zu untersuchenden Flüssigkeit die Position der Knoten der akustischen Wellen in Transversalrichtung durch Einstellen der Frequenz der Schallwellen festgelegt. Die Position der Knoten in Querrichtung zur Flussrichtung hängt von der Wellenlänge der stehenden Wellen und damit von der zur Anregung der Wellen verwendeten Frequenz ab. Auf diese Weise lässt sich die Position der Wellenknoten auf eine gewünschte Position einer Beobachtungsebene bzw. einen Zentralbereich eines Beobachtungsbereichs in Querrichtung zur Flussrichtung einstellen.

In einer besonders bevorzugten Variante der erfindungsgemäßen Vorrichtung zur Untersuchung von Partikeln in einer zu untersuchenden Flüssigkeit weisen die zu untersuchenden Partikel Leukozyten oder Erythrozyten oder Thrombozyten auf. Das beschriebene Anreicherungsverfahren lässt sich auch auf die Anreicherung von Erythrozyten anwenden. Erythrozyten haben eine Größe von 5 bis 6 µm und sind doppelt so groß wie Thrombozyten, welche ungefähr 1,5 bis 3,5 µm groß sind. Somit lassen sich auch die Erythrozyten mit Hilfe von Schallwellen von den Thrombozyten separieren. Zusätzlich könnte auch eine zusätzliche Prozessstufe der beschriebenen Prozessstufe nachgeschaltet sein, welche noch die Leukozyten von den Erythrozyten trennt und analog zu der beschriebenen Prozessstufe funktioniert.

Die Thrombozyten können als kleinste Teilchen dadurch separiert werden, dass alle anderen Blutbestandteile, d.h. die Leukozyten und die Erythrozyten auf die beschriebene Weise separiert werden und der Zentralstrom mit den Thrombozyten in die Beobachtungsebene gelenkt wird.

Besonders bevorzugt weist die erfindungsgemäße Vorrichtung zur Untersuchung von Partikeln in einer zu untersuchenden Flüssigkeit eine der Fließpassage vorgeschaltete Trennstufe auf. Dabei weist die Trennstufe eine zusätzliche Fließpassage mit einem Zentralstrom mit einer zunächst von den zu untersuchenden Partikeln freien Flüssigkeit und mindestens einem Mantelstrom, im Folgenden als Trennstufen-Mantelstrom bezeichnet, auf, welcher längs dem Zentralstrom durch die Fließpassage der Trennstufe fließt und die zu untersuchende Flüssigkeit aufweist. Vorzugsweise umgibt der mindestens eine Trennstufen-Mantelstrom den Zentralstrom. Als Zentralstrom soll in diesem Zusammenhang ein Flüssigkeitsstrom betrachtet werden, neben dem mindestens ein weiterer Flüssigkeitsstrom parallel fließt, in diesem Fall ein Mantelstrom. Wie beschrieben, wird der Zentralstrom vorzugsweise von dem mindestens einen Mantelstrom umgeben, so dass er dann zentral durch die Fließpassage fließt.

Bei dieser Variante weist die Trennstufe außerdem eine zusätzliche Wellenerzeugungseinrichtung zur piezoakustischen Erzeugung von Schallwellen auf, welche sich transversal zur Fließrichtung der zu untersuchenden Flüssigkeit durch die Fließpassage der Trennstufe ausbreiten und einen Wellenknoten in einer Ebene durch den Zentralstrom ausbilden, so dass aufgrund der Druckwirkung der Schallwellen in Transversalrichtung Partikel, insbesondere Partikel mit einem größeren Durchmesser im Vergleich zu anderen Partikeltypen in der zu untersuchenden Flüssigkeit, in den Zentralstrom verschoben werden und dort angereichert werden. Bei dieser besonders vorteilhaften Variante erfolgt also eine zusätzliche Separation der zu untersuchenden Partikel aus der zu untersuchenden Flüssigkeit vor der Separation der zu untersuchenden Partikel und deren Verschiebung in die Beobachtungsebene, so dass die Zuverlässigkeit und Effektivität der Separation der zu untersuchenden Partikel erhöht ist.

In einer besonders vorteilhaft anzuwendenden Variante der erfindungsgemäßen Vorrichtung zur Untersuchung von Partikeln in einer zu untersuchenden Flüssigkeit ist die von den zu untersuchenden Partikeln zunächst freie Flüssigkeit transparent. Die hohe Transparenz der von den zu untersuchenden Partikeln freien Flüssigkeit erlaubt eine erleichterte Beobachtung von in diese Flüssigkeit transferierten zu untersuchenden Partikeln.

In einer besonders vorteilhaften Ausgestaltung der erfindungsgemäßen Vorrichtung zur Untersuchung von Partikeln in einer zu untersuchenden Flüssigkeit sind die Wellenerzeugungseinrichtungen der Trennstufe und der Prozessstufe derart ausgebildet, dass die Ausbreitungsrichtung der Schallwellen in der Trennstufe und die Ausbreitungsrichtung der Schallwellen in der Fließpassage der Prozessstufe zueinander orthogonal und orthogonal zur Fließrichtung der zu untersuchenden Flüssigkeit verlaufen.

Alternativ können die Trennstufe sowie die Prozessstufe derart ausgebildet sein, dass die Separation in der Trennstufe und die anschließende Verschiebung des Zentralstroms in der Prozessstufe in derselben Richtung verlaufen.

Dazu kann man entweder die Dimensionen eines die Fließpassage bzw. die Fließstrecke definierenden Kanals vertauschen oder die Wellenerzeugungseinrichtung seitlich anstatt in der Vertikalen positionieren.

Die Ausrichtung der Ausbreitungsrichtung der akustischen Wellen richtet sich nach der geometrischen Form der die Fließpassage umgebenden Leitungselemente und nach der Ausrichtung und Position einer daran anzuordnenden Beobachtungseinheit, wie zum Beispiel ein Beobachtungsmikroskop.

In einer speziellen Variante der erfindungsgemäßen Vorrichtung zur Untersuchung von Partikeln in einer zu untersuchenden Flüssigkeit weitet sich die Fließpassage der Prozessstufe vor der Längsposition der Wellenerzeugungseinrichtung der Prozessstufe quer zur Fließrichtung auf, so dass die Fließgeschwindigkeit der zu untersuchenden Flüssigkeit und der mindestens einen Mantelflüssigkeit reduziert sind. Infolge der geringeren Fließgeschwindigkeit lassen sich zu untersuchende Partikel leichter beobachten und analysieren, da mehr Zeit verbleibt, in der sich die Partikel im Beobachtungsbereich eines verwendeten Beobachtungsgeräts aufhalten.

Bevorzugt weist die erfindungsgemäße Vorrichtung zur Untersuchung von Partikeln in einer zu untersuchenden Flüssigkeit eine Pufferzugabeeinheit auf. Die Pufferzugabeeinheit ist dazu eingerichtet, einen Puffer zur hypotonischen Lösung dem Zentralstrom oder der zu untersuchende Flüssigkeit beizugeben. Mit Hilfe des zusätzlichen Puffers werden Partikel mit höherem intrazellulärem osmotischen Druck aufgelöst, während Partikel mit niedrigerem intrazellulärem osmotischen Druck erhalten bleiben.

Bei der Separation von weißen Blutkörperchen aus einer Blutflüssigkeit werden mit Hilfe der zusätzlichen Pufferlösung rote Blutkörperchen aufgrund ihres höheren intrazellulären osmotischen Drucks aufgelöst, während weiße Blutkörperchen erhalten bleiben. Diese Maßnahme ermöglicht somit eine weiter verbesserte Trennung von zu untersuchenden weißen Blutkörperchen von der Blutflüssigkeit.

Besonders bevorzugt weist die erfindungsgemäße Vorrichtung zur Untersuchung von Partikeln in einer zu untersuchenden Flüssigkeit eine Einheit auf, welche vorzugsweise mit dem zweiten Einlass in Verbindung steht und dazu eingerichtet ist, der mindestens einen Mantelflüssigkeit Marker für die Zielpartikel zuzugeben. Marker können spezifische chemische Eigenschaften haben, so dass sie sich nur mit bestimmten zu analysierenden Bestandteilen einer zu untersuchenden Flüssigkeit verbinden. Sie können zum Beispiel eine spezielle Farbe aufweisen und somit die interessierenden Bestandteile der zu untersuchenden Flüssigkeit leicht kenntlich machen. Die Verwendung von Markern erleichtert also die Auffindbarkeit von zu beobachtenden Partikeln in einer zu untersuchenden Flüssigkeit. Marker können auch spezifische physikalische Eigenschaften haben, die eine Separation der mit Ihnen behafteten Partikel erleichtert oder auch erst möglich macht. Beispielsweise könnte man grundsätzlich schwer zu trennende Partikel mit geeigneten Markern versehen, so dass die vorstehend beschriebenen Separationsverfahren leichter und effektiver anwendbar sind. Bisweilen kann eine Situation vorliegen, bei der in einer Flüssigkeit vorhandene unterschiedliche Partikel annähernd gleich groß sind und daher mit Schallwellen nur schwer voneinander zu separieren wären. Versieht man nun die interessierenden Partikeln mit entsprechend groß dimensionierten Markern, kann trotzdem eine Separation der interessierenden Partikel mit Hilfe von Schallwellen erfolgen.

Überdies kann die erfindungsgemäße Vorrichtung zur mikroskopischen Beobachtung von Partikeln in einer zu untersuchenden Flüssigkeit eine Sammeleinheit aufweisen, welche der Prozessstufe nachgeschaltet, stromabwärts der Längsposition des Mikroskops angeordnet ist und dazu eingerichtet ist, die untersuchten Partikel zu sammeln. Die gesammelten Partikel können anschließend mit einer weiteren Untersuchungsmethode, welche eine Anreicherung der untersuchten Partikel benötigt, vorzugsweise molekularbiologische Messmethoden, weiter untersucht werden. Auf diese Weise kann die mit Hilfe der erfindungsgemäßen Vorrichtung erzielte Separation und Anreicherung von zu untersuchenden Partikeln mehrfach und für verschiedene Untersuchungen nacheinander genutzt werden.

Die erfindungsgemäße Vorrichtung zur mikroskopischen Beobachtung von Partikeln in einer zu untersuchenden Flüssigkeit kann zudem eine Partikeltransfereinrichtung aufweisen, welche stromabwärts, d.h. der Prozessstufe nachgeschaltet, hinter der Längsposition des Mikroskops angeordnet ist und zum Transfer der Partikel, insbesondere der untersuchten Partikel, von der Fließpassage auf einen Objektträger zur weiteren Untersuchung der Partikel ausgebildet ist. Eine solche Transfereinrichtung kann zum Beispiel Teil der beschriebenen Sammeleinheit sein und eine Öffnung aufweisen, durch die mit den untersuchten Partikeln angereicherte Flüssigkeitstropfen hindurchbewegt werden, so dass sie anschließend auf einen Objektträger fallen. Der Objektträger kann als Transportmittel der untersuchten Partikel an eine andere Position genutzt werden, an der weitere Untersuchungen durchgeführt werden.

Die Erfindung wird im Folgenden unter Hinweis auf die beigefügten Figuren anhand von Ausführungsbeispielen noch einmal näher erläutert. Es zeigen:
- FIG 1: eine schematische Darstellung einer Vorrichtung zur Untersuchung von weißen Blutkörperchen gemäß einem Ausführungsbeispiel der Erfindung,
- FIG 2: eine schematische Darstellung eines Trennvorgangs von weißen Blutkörperchen in einer Trennstufe,
- FIG 3: eine schematische Darstellung einer Verschiebung von weißen Blutkörperchen in eine Beobachtungsebene,
- FIG 4: eine Zusammenschau der Trenn- und Verschiebungsvorgänge in einer Vorrichtung zur Untersuchung von weißen Blutkörperchen bei der Anwendung einer hypotonischen Lösung gemäß einem Ausführungsbeispiel der Erfindung,
- FIG 5: eine schematische Darstellung einer Vorrichtung zur Untersuchung von weißen Blutkörperchen gemäß einem Ausführungsbeispiel der Erfindung mit einem nachgeschalteten Objektträger,
- FIG 6: ein Flussdiagramm, mit dem der Ablauf eines Verfahrens zur Untersuchung von weißen Blutkörperchen gemäß einem Ausführungsbeispiel der Erfindung veranschaulicht wird.

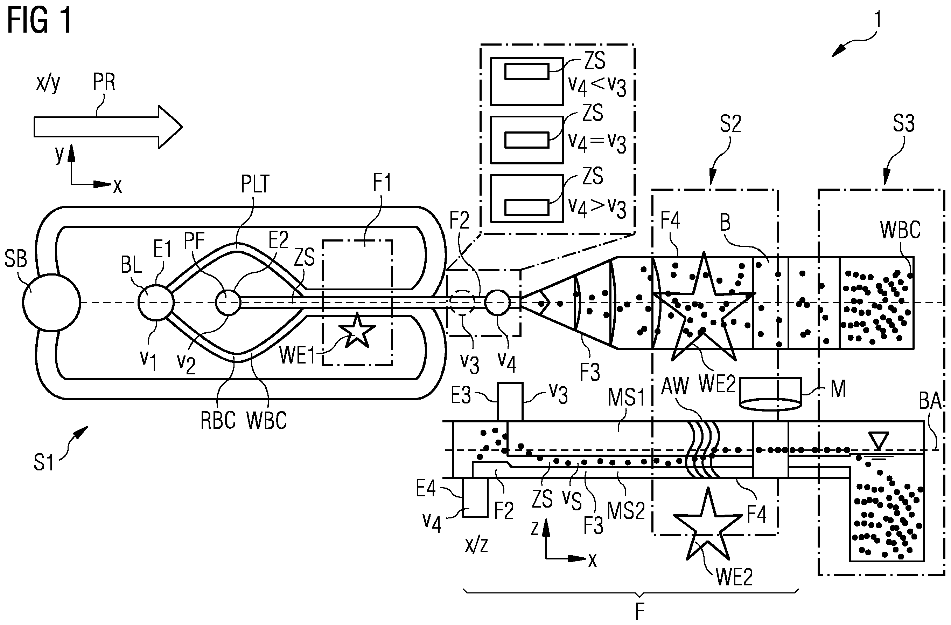

Ein erstes Ausführungsbeispiel einer Vorrichtung 1 zur Untersuchung von weißen Blutkörperchen WBC wird im Zusammenhang mit FIG 1 bis FIG 3 beschrieben.

In FIG 1 ist eine Draufsicht auf ein Mikrofluidkanalsystem 1 gezeigt, welches als Fließzelle zur Untersuchung von weißen Blutkörperchen WBC dient eine Vorrichtung zur Untersuchung von Partikeln in einer zu untersuchenden Flüssigkeit gemäß einem Ausführungsbeispiel der Erfindung darstellt. Das Mikrofluidkanalsystem umfasst eine Trennstufe S1, eine der Trennstufe nachgeschaltete Prozessstufe S2 und eine der Prozessstufe nachfolgende Sammeleinheit S3. Die Draufsicht erfolgt auf die x/y-Ebene. Dabei ist die Fließrichtung der zu untersuchenden Flüssigkeit die x-Richtung. Zusätzlich ist in FIG 1 der auf der rechten Seite abgebildete Teil, d.h. die Prozessstufe S2, umfassend eine Fließpassage F, und die Sammeleinheit S3 des Mikrofluidkanalsystems 1 unten rechts im Bild in Seitenansicht, d.h., in der x/z-Ebene dargestellt.

Das Mikrofluidkanalsystem 1 weist eine Trennstufe S1 auf. Die Trennstufe S1 umfasst einen ersten Einlass E1, in dem Blutflüssigkeit BL mit einer ersten Flussrate v₁ in das Mikrofluidkanalsystem 1 hineinströmt. Zusätzlich umfasst das Mikrofluidkanalsystem 1 einen zweiten Einlass E2, durch den eine von der Blutflüssigkeit freie Flüssigkeit PF, in diesem Fall eine Pufferflüssigkeit PF, mit einer zweiten Flussrate v₂ einströmt. Die beiden Flüssigkeiten BL, PF werden in einer Fließpassage F1 bzw. einem ersten Fließpassagenabschnitt F1 zusammengeführt und zwar derart, dass die Pufferflüssigkeit PF einen Zentralstrom ZS bildet und die Blutflüssigkeit BL einen Trennstufen-Mantelstrom MS um die Pufferflüssigkeit PF bildet, der auf beiden Seiten außen an dem Zentralstrom ZS vorbeifließt. Aufgrund der kleinen Abmessungen des Mikrofluidkanals 1 (die Breite beträgt zwischen 100 und 1500 um und die Höhe beträgt etwa 30 bis 500 um) verhalten sich der Zentralstrom ZS und der Trennstufen-Mantelstrom MS bei typischen Fließgeschwindigkeiten jeweils laminar, so dass sie aneinander vorbeiströmen, ohne sich zu vermischen. Die zu untersuchende Blutflüssigkeit BL strömt an dem Zentralstrom ZS auf beiden Seiten vorbei und nach dem Absolvieren des ersten Fließpassagenabschnitts F1 schließlich zu einem Abflussbereich SB zurück, welcher in FIG 1 auf der dem zweiten Einlass E2 gegenüberliegenden Seite des ersten Einlasses E1, d.h. ganz links eingezeichnet ist. Die Blutflüssigkeit BL umfasst in dem in FIG 1 gezeigten Ausführungsbeispiel rote Blutkörperchen RBC, weiße Blutkörperchen WBC und Blutplättchen PLT.

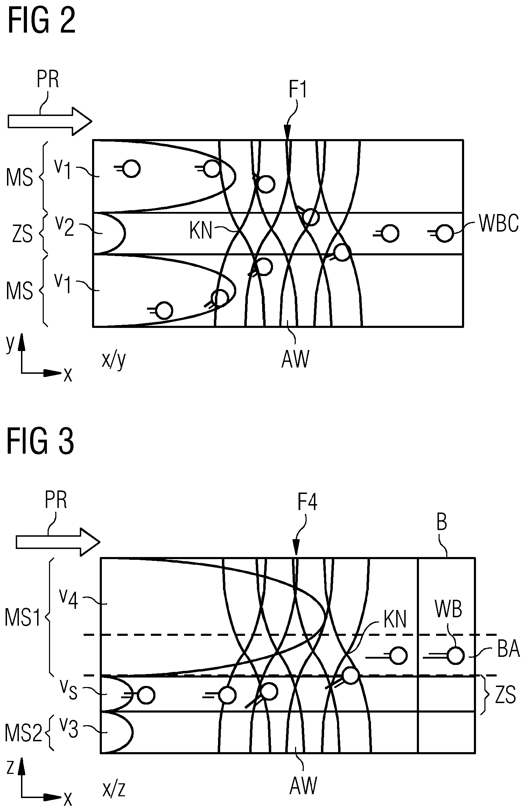

An dem ersten Fließpassagenabschnitt F1 ist auch eine erste Wellenerzeugungseinrichtung WE1 zur piezoakustischen Erzeugung von Schallwellen AW (siehe FIG 2)angeordnet. Die erste Wellenerzeugungseinrichtung WE1 ist in FIG 1 mit einem Stern symbolisiert. Mit Hilfe der ersten Wellenerzeugungseinrichtung WE1 werden sich senkrecht zur Flussrichtung ausbreitende Schallwellen AW (siehe FIG 2) erzeugt, welche Wellenknoten in einem Zentralbereich des ersten Fließpassagenabschnitts F1 bilden, in dem der Zentralstrom ZS verläuft. Weiße Blutkörperchen WBC, die sich in dem Trennstufen-Mantelstrom MS aufhalten, werden aufgrund ihrer Größe durch die Schallwellen AW mit höherer Geschwindigkeit in Richtung des Zentralstroms ZS abgelenkt als andere Bestandteile des Bluts BL, wie zum Beispiel rote Blutkörperchen RBC oder Blutplättchen PLT. Auf diese Weise kommt es in dem ersten Fließpassagenabschnitt F1 zu einer ersten Anreicherung von weißen Blutkörperchen WBC in dem Zentralstrom ZS.

Im weiteren Prozessverlauf PR erfolgt nun ein Übergang des Zentralstroms ZS in eine Prozessstufe S2 des Mikrofluidkanalsystems 1. Die Prozessstufe S2 umfasst eine Fließpassage F mit einem zweiten F2, einem dritten F3 und einem vierten Fließpassagenabschnitt F4. In den zweiten Fließpassagenabschnitt der Fließpassage F strömt aus einem dritten Einlass E3 eine Pufferflüssigkeit PF1 mit einer dritten Flussrate v₃ und aus einem in z-Richtung dem dritten Einlass E3 gegenüberliegenden vierten Einlass E4 strömt eine Pufferflüssigkeit PF2 mit einer vierten Flussrate v₄ in den zweiten Fließpassagenabschnitt der Fließpassage F. Die beiden Pufferflüssigkeiten PF1, PF2 bilden jeweils einen ersten bzw. zweiten Mantelstrom MS1, MS2 und beschränken den Zentralstrom ZS mit den weißen Blutkörperchen WBC auf einen zwischen den beiden Mantelströmen MS1, MS2 liegenden Bereich, der nicht in einer Beobachtungsebene bzw. einem Beobachtungsbereich BA eines später zur Beobachtung verwendeten Mikroskops M liegt (siehe auch FIG 2). Diese Flussstruktur ist in einem dritten Fließpassagenabschnitt F3 erreicht. In dem dritten Fließpassagenabschnitt F3 wird der Mikrofluidkanal 1 in y-Richtung, d.h. quer zur Fließrichtung, aufgeweitet, um die Geschwindigkeit der ersten und zweiten Mantelströme MS1, MS2 und des Zentralstroms ZS zu reduzieren. Eine Verlangsamung der Strömungsgeschwindigkeiten ist notwendig, damit nachfolgend einzelne weiße Blutkörperchen WBC mit einem Mikroskop M beobachtet werden können. Wie in einer vergrößerten Darstellung in FIG 1 zu erkennen ist, hängt die Position des Zentralstroms ZS von der Größe der Flussraten v3, v4 der ersten und zweiten Mantelströme an. Ist v₄ < v₃, so ist der Zentralstrom in z-Richtung nach oben hin verschoben. Ist v₄ = v₃, so liegt der Zentralstrom ZS in z-Richtung betrachtet genau in der Mitte des Querschnitts der Fließpassage F, und ist v₄ > v₃, so liegt der Zentralstrom ZS in z-Richtung betrachtet unterhalb der Mitte des Querschnitts der Fließpassage F.

In einem vierten Fließpassagenabschnitt F4 werden mit Hilfe einer zweiten Wellenerzeugungseinrichtung WE2 (in FIG 1 als Stern symbolisiert) erneut sich senkrecht zur Flussrichtung ausbreitende Schallwellen AW, allerdings anstatt in y-Richtung ausbereitend diesmal in z-Richtung ausbreitend erzeugt. Die Schallwellen AW, wobei es sich vorzugsweise um stehende Wellen handelt, weisen erneut Wellenknoten KN auf, die allerdings diesmal nicht in dem Strömungsbereich des Zentralstroms ZS liegen, sondern benachbart im Strömungsbereich eines der beiden Mantelströme MS1, MS2 liegen (in FIG 3 liegen die Knoten KN in dem ersten Mantelstrom MS1). Die Wellenknoten liegen allerdings in der Beobachtungsebene BA bzw. in z-Richtung betrachtet auf der Höhe des Beobachtungsbereichs BA des Mikroskops M. Aufgrund der bereits erläuterten Größenunterschiede werden nun wieder die weißen Blutkörperchen WBC bevorzugt in die Beobachtungsebene BA abgelenkt, d.h. sie geraten in den ersten Mantelstrom MS1 (siehe FIG 3), durch den auch die Beobachtungsebene BA des Mikroskops M verläuft. Der erste Mantelstrom MS1 ist vorzugsweise farblos, so dass die im ersten Mantelstrom MS1 befindlichen weißen Blutkörperchen WBC gut zu erkennen sind. In einem am Ende des vierten Fließpassagenabschnitts F4 angeordneten Beobachtungsabschnitt B erfolgt nun senkrecht zur Flussrichtung der weißen Blutkörperchen WBC deren Beobachtung durch ein senkrecht zur Fließrichtung, d h. in z-Richtung ausgerichtetes, an dem vierten Fließpassagenabschnitt F4 positioniertes Mikroskop M. Beispielsweise können die weißen Blutkörperchen WBC mit Hilfe des Mikroskops M gezählt werden und/oder deren Struktur und Aufbau beobachtet werden. Anschließend erfolgt in einem dritten Abschnitt des Mikrofluidkanalsystems 1, auch als Sammelbereich S3 bezeichnet, eine Sammlung der weißen Blutkörperchen WBC, die im Anschluss noch für zusätzliche Untersuchungen genutzt werden können.

In FIG 2 ist der Vorgang der Separation von weißen Blutkörperchen WBC in dem ersten Fließpassagenabschnitt F1 der Trennstufe S1 und deren Anreicherung in einem eine Pufferlösung umfassenden Zentralstrom ZS vergrößert gezeigt. Wie bereits erläutert, werden die weißen Blutkörperchen WBC, welche sich in dem Trennstufen-Mantelstrom MS befinden, mit Hilfe von Schallwellen AW in Richtung des Zentralbereichs des ersten Fließpassagenabschnitts F1 abgelenkt, wo sie aufgrund der Anordnung der Knoten KN der Schallwellen AW auf der Mittelachse des ersten Fließpassagenabschnitts F1 in dem Zentralstrom ZS verbleiben. Die Knoten KN sind durch sich kreuzende Linien angedeutet. Die Schallwellen AW werden auf der der Schallwellenerzeugungseinrichtung WE1 gegenüberliegenden Seite der Berandung des ersten Fließpassagenabschnitts F1 reflektiert und bilden stehende Wellen aus, welche die skizzierten Wellenknoten ausbilden. Die akustischen Wellen AW ermöglichen es den größeren Zellen, in diesem Fall den weißen Blutkörperchen WBC (ungefähr 7 bis 15 um Durchmesser), sich schneller in Richtung Zentralbereich des ersten Fließpassagenabschnitts F1 zu bewegen als kleinere Zellen, wie zum Beispiel rote Blutkörperchen RBC (ungefähr 5 bis 6 um) groß. Im Zentralbereich des ersten Fließpassagenabschnitts F1, wo sich die Knoten KN der akustischen Wellen AW befinden, werden die weißen Blutkörperchen WBC nur durch den laminaren Zentralstrom ZS bewegt und somit entlang der Zentralachse des Mikrofluidkanals 1 stromabwärts, d.h. in Prozessrichtung PR bewegt. Während der Positionsänderung der weißen Blutkörperchen WBC senkrecht zur Flussrichtung werden die weißen Blutkörperchen WBC in ein anderes Medium, das Medium des Zentralstroms ZS, überführt. Der Zentralstrom ZS ist frei von anderen Partikeln und daher hochtransparent. Der Durchmesser des Trennstufen-Mantelstroms MS und des Zentralstroms ZS bzw. deren Position sowie die Anreicherung der weißen Blutkörperchen WBC im Zentralstrom ZS kann mit Hilfe der Flussraten v₁ bzw. v₂ des Mantelstroms MS bzw. des Zentralstroms ZS beeinflusst werden. Bei einem Verhältnis zwischen der ersten Flussrate v₁ und der zweiten Flussrate v₂ von 10 wird eine Anreicherung von weißen Blutkörperchen WBC in dem Zentralstrom ZS erreicht, was andererseits mit einen stark reduzierten Anteil der roten Blutkörperchen im Zentralstrom ZS im Vergleich zu der Blutflüssigkeit BL in dem Trennstufen-Mantelstrom MS verbunden ist.

Wie bereits erwähnt, fließt der Zentralstrom ZS weiter stromabwärts zu einer Prozessstufe S2 und dort in einem zweiten Fließpassagenabschnitt F2 an einem dritten und einem vierten Einlass E3, E4 vorbei, aus denen erste und zweite Mantelströme MS1, MS2 mit dritten und vierten Flussraten v₃, v₄ in den Mikrofluidkanal 1 hineinströmen. Die beiden ersten und zweiten Mantelströme MS1, MS2 steuern die Positionierung des Zentralstroms ZS in z-Richtung. Dieses Szenario ist in FIG 3 vergrößert gezeigt. Zum einen wird die Ausdehnung des Zentralstroms ZS, welcher eine Flussrate vₛ aufweist, durch die ersten und zweiten Mantelströme MS1, MS2 in z-Richtung eingeschränkt, zum anderen wird die Lage des Zentralstroms ZS mit Hilfe der Wahl der dritten und vierten Flussraten V₃, V₄ der beiden Mantelströme MS1, MS2 derart festgelegt, dass der Zentralstrom ZS außerhalb einer Beobachtungsebene bzw. eines Beobachtungsbereichs BA eines Mikroskops M liegt, welches an einer Beobachtungsposition bzw. einem Beobachtungsabschnitt B des Mikrofluidkanals 1 angeordnet ist. Diese Positionierung des Zentralstroms ZS erfolgt in einem dritten Fließpassagenabschnitt F3. Die Flussrate des Zentralstroms ZS, zunächst mit v₂ bezeichnet, bleibt selbstverständlich gleich, jedoch ändert sich nach dem zweiten Fließpassagenabschnitt F2 der Querschnitt bzw. die Querschnittsfläche des Zentralstroms ZS. Um dies anzudeuten, wird ab dem dritten Fließpassagenabschnitt F3 das Bezugszeichen "vₛ" verwendet. Der Querschnitt des Zentralstroms ZS hängt ab dem dritten Fließpassagenabschnitt F3 von den Flussraten der ersten und zweiten Mantelströme MS1, MS2 ab.

Um die weißen Blutkörperchen WBC weiter anzureichern und noch im Zentralstrom ZS vorhandene rote Blutkörperchen RBC aus dem Beobachtungsbereich BA herauszuhalten, wird der Zentralstrom ZS mit Hilfe der ersten und zweiten Mantelströme MS1 und MS2 in einer nicht-zentrischen Position innerhalb des Mikrofluidkanals 1 gehalten.

Im weiteren Prozessverlauf PR werden in einem vierten Fließpassagenabschnitt F4 mit Hilfe einer zweiten Wellenerzeugungseinrichtung WE2 akustische Wellen AW mit einer Ausbreitungsrichtung quer zur Flussrichtung und Wellenknoten KN in der Beobachtungsebene bzw. dem in z-Richtung eingeschränkten Beobachtungsbereich BA erzeugt. Somit werden in Folge des Drucks der Schallwellen AW die größeren weißen Blutkörperchen WBC in den ersten Mantelstrom MS1 und damit in die Beobachtungsebene BA verschoben, während die kleineren roten Blutkörperchen RBC mehrheitlich in dem Zentralstrom ZS verbleiben. Aufgrund der deutlich größeren Kräfte der akustischen Wellen AW im Vergleich zu den Fließkräften des Zentralstroms ZS sowie der beiden Mantelströme MS1, MS2 haben die weißen Blutkörperchen WBC ausreichend Zeit, in den ersten Mantelstrom MS1 zu wechseln, bevor sie in den Beobachtungsabschnitt B geraten. Dort können die weißen Blutkörperchen WBC in der transparenten Pufferlösung PF1 des ersten Mantelstroms MS1 leicht beobachtet werden. Das Mikroskop M weist aufgrund seiner begrenzten Tiefenschärfe einen in z-Richtung beschränkten Beobachtungsbereich BA auf. Indem die weißen Blutkörperchen WBC genau in diesen Beobachtungsbereich BA versetzt werden, können sie mit optimaler Auflösung beobachtet werden.

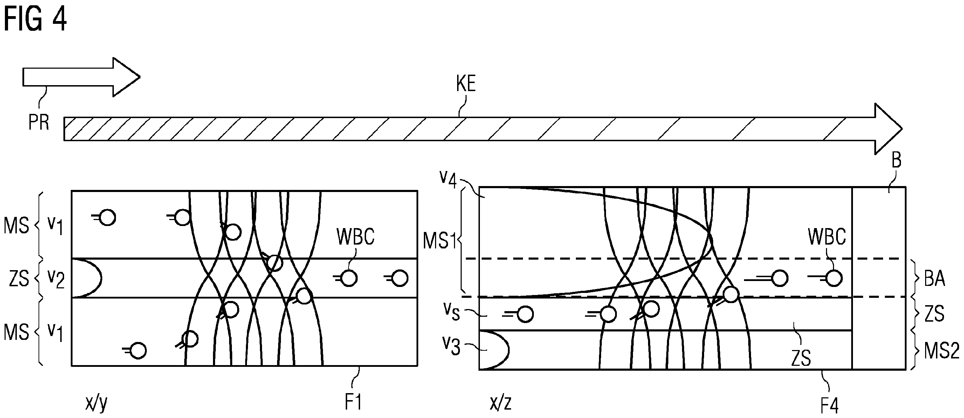

In FIG 4 ist der in FIG 1 bis FIG 3 veranschaulichte zweistufige Separations- und Positionierungsprozess noch einmal durch eine sequentielle Darstellung der beiden Trennungs- und Positionierungsvorgänge veranschaulicht, wobei bei dem Ausführungsbeispiel gemäß FIG 4 zusätzlich bei dem ersten Fließpassagenabschnitt F1 in den Zentralstrom ZS ein hypotonischer Puffer gegeben wird. Während in dem ersten Fließpassagenabschnitt F1 eine erste Anreicherung von weißen Blutkörperchen WBC in einem Zentralstrom ZS durch Verschiebung der wei-ßen Blutkörperchen WBC in y-Richtung erfolgt und diese auch durch den hypotonischen Puffer unbeeinträchtigt bleiben, werden rote Blutkörperchen, welche aus dem Trennstufenmantelstrom MS unerwünscht ebenfalls in den Zentralstrom ZS gelangen, durch die hypotonischen Bedingungen in dem Zentralstrom ZS nach und nach aufgelöst, so dass die Konzentration der roten Blutkörperchen in dem Zentralstrom ZS allmählich abnimmt. Dies ist durch die Schraffur eines die Konzentration der roten Blutkörperchen symbolisierenden Pfeils KE verdeutlich, wobei größere Abstände zwischen Schraffurlinien eine geringere Konzentration von roten Blutkörperchen bedeuten sollen.

Anschließend wird dieser Zentralstrom ZS in einem zweiten Fließpassagenabschnitt F2 (siehe FIG 1) in z-Richtung dezentriert. Nach der Aufweitung der Flüssigkeitsströme ZS, MS1, MS2 in y-Richtung, werden in einem vierten Fließpassagenabschnitt F4 erneut weiße Blutkörperchen WBC separiert (siehe FIG 4 auf der rechten Seite), allerdings diesmal aus dem Zentralstrom ZS in z-Richtung in einen ersten Mantelstrom MS1. Dort werden die weißen Blutkörperchen WBC in einem dem Beobachtungsbereich BA entsprechenden z-Bereich gehalten und geraten anschließend stromabwärts an die Längsposition B (siehe FIG 1), an der ein Mikroskop M angeordnet ist. Auch während der Passage des vierten Fließpassagenabschnitts F4 werden eventuell in dem Zentralstrom ZS noch vorhandene rote Blutkörperchen weiter aufgelöst. Wie bereits erwähnt, soll mit Hilfe des in Prozessrichtung PR verlaufenden Pfeils KE die in Stromabwärtsrichtung immer geringer werdende Konzentration der roten Blutkörperchen in dem Zentralstrom ZS symbolisiert werden, so dass kurz vor der Position B des Mikroskops M in dem Beobachtungsbereich BA fast nur weiße Blutkörperchen WBC vorhanden sind. Zusätzlich können dem ersten Mantelstrom MS1 über den vierten Einlass E4 in dem zweiten Fließpassagenabschnitt F2 auch farbige Marker, wie zum Beispiel SDS, beigeben werden, mit denen die Morphologie der Zellen geändert wird.

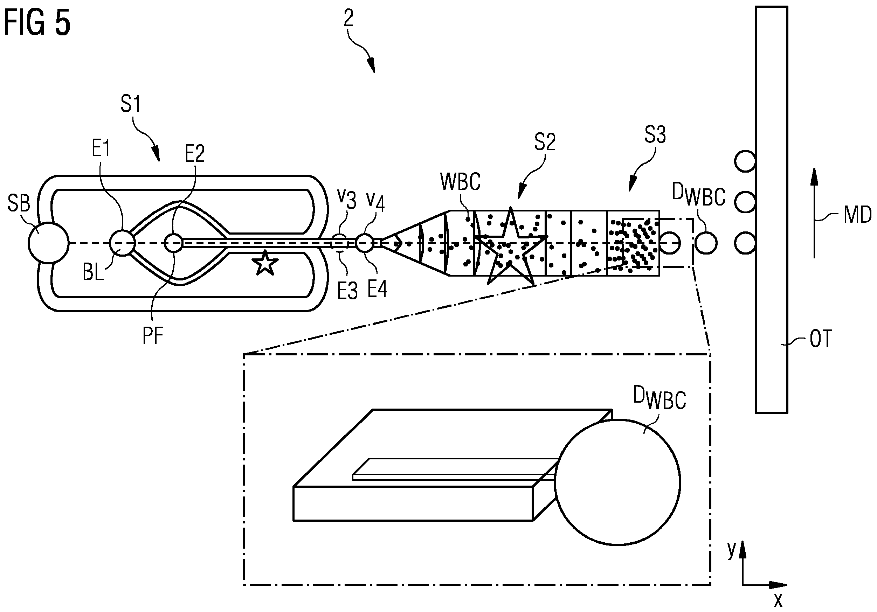

In FIG 5 ist eine schematische Darstellung eines Mikrofluidkanalsystems 2 zur Untersuchung von weißen Blutkörperchen WBC gemäß einem Ausführungsbeispiel der Erfindung mit einem nachgeschalteten Objektträger OT veranschaulicht. Der Aufbau des in FIG 5 gezeigten Mikrofluidkanalsystems 2 entspricht weithend dem des in FIG 1 gezeigten Systems 1. Zusätzlich umfasst das in FIG 5 gezeigte System 2 jedoch noch einen Objektträger OT, auf den aus dem Sammelbereich S3 des Mikrofluidkanalsystems 2 Tropfen D_{WBC} mit einem definierten Volumen von z.B. 20 bis 35 µl fallen (Schwerkraft in x-Richtung), welche weiße Blutkörperchen WBC enthalten. Der Objektträger OT kann in Bewegungsrichtung MD, in diesem Fall in y-Richtung, verschoben werden, so dass die einzelnen Tropfen D_{WBC} mit den weißen Blutkörperchen WBC hintereinander und geordnet auf dem Objektträger OT zu liegen kommen. Die Tropfen D_{WBC} auf dem Objektträger OT können anschließend mit Hilfe verschiedener Standard-Färbungs-Technologien zur Zellidentifizierung, wie zum Beispiel die Hoechst-Färbung, bearbeitet werden. Infolge der starken Anreicherung der weißen Blutkörperchen WBC mit Hilfe des Verfahrens gemäß der Erfindung wird zum Beispiel das Identifizieren von Pathologien von weißen Blutkörperchen WBC mit einer viel höheren statistischen Signifikanz ermöglicht, als es zum Beispiel aktuell mit Hilfe einer Giemsa-Färbung von weißen Blutkörperchen WBC in einer nicht angereicherten Blutprobe der Fall ist.

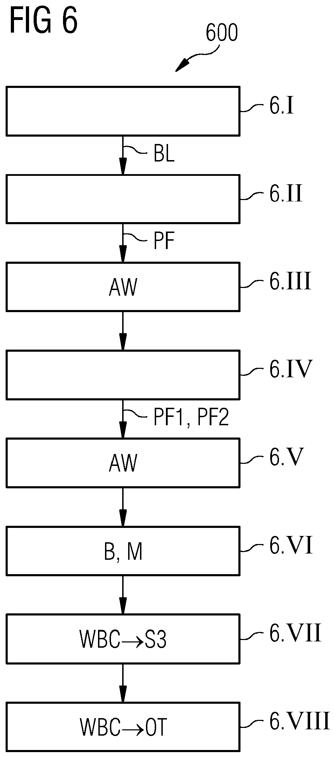

In FIG 6 ist ein Flussdiagramm 600 gezeigt, mit dem der Ablauf eines Verfahrens zur Untersuchung von weißen Blutkörperchen gemäß einem Ausführungsbeispiel der Erfindung veranschaulicht wird. Bei dem Schritt 6.I wird Blutflüssigkeit BL in einer Trennstufe S1 über einen ersten Einlass E1 in ein peripher angeordnetes Zuflusssystem eines ersten Fließpassagenabschnitts F1 eines Mikrofluidkanalsystems 1 eingebracht. Bei dem Schritt 6.II wird ein zweiter Einlass E2 des Mikrofluidkanalsystems 1 geöffnet, über den eine Pufferlösung PF in einen zentral angeordneten Zufluss des ersten Fließpassagenabschnitts F1 hineinströmt. Während das durch den ersten Einlass E1 strömende Blut in dem ersten Fließpassagenabschnitt F1 einen Trennstufen-Mantelstrom MS mit einer ersten Flussrate v₁ bildet, bildet die zentral durch die Fließpassage F1 fließende Pufferlösung PF einen Zentralstrom ZS mit einer zweiten Flussrate v₂. Bei dem Schritt 6.III werden nun von einer Schallwellenerzeugungseinrichtung, beispielsweise mit Hilfe von Piezoelementen, Schallwellen AW erzeugt, welche sich quer zu der Flussrichtung des ersten Fließpassagenabschnitts F1 des Mikrofluidkanalsystems 1 ausbreiten. Infolge des durch die Schallwellen AW entstehenden Drucks in Querrichtung des ersten Fließpassagenabschnitts F1 werden vermehrt weiße Blutkörperchen WBC aus dem Trennstufen-Mantelstrom MS in den Zentralstrom ZS transferiert, so dass sie sich in der den Zentralstrom ZS bildenden Pufferlösung PF anreichern. Bei dem Schritt 6.IV werden nun nach dem Übergang in eine Prozessstufe S2 mit einer Fließpassage F in einem zweiten Fließpassagenabschnitt F2 der Fließpassage F ein dritter Einlass E3 und ein vierter Einlass E4 derart angesteuert, dass hochtransparente Pufferlösungen PF1, PF2 in den zweiten Fließpassagenabschnitt F2 des Mikrofluidkanalsystems 1 hineinströmen und in z-Richtung den Zentralstrom ZS umgebende erste und zweite Mantelströme MS1, MS2 bilden. Dabei sind die Flussraten v₃, v₄ der ersten und zweiten Mantelströme MS1, MS2 derart gewählt, dass der Zentralstrom ZS in z-Richtung, d.h. in Beobachtungsrichtung eines Mikroskops, dezentriert wird, d.h. der Zentralstrom ZS wird in z-Richtung verschoben, so dass er nicht mehr in einer späteren Beobachtungsebene BA fließt.

Nachdem die Fließpassage F sich in einem dritten Fließpassagenabschnitt F3 aufgeweitet hat, so dass die Fließgeschwindigkeit sowohl des Zentralstroms ZS als auch der ersten und zweiten Mantelströme MS1, MS2 verringert wurden, werden bei einem Schritt 6.V in einem vierten Fließpassagenabschnitt F4 der Fließpassage F erneut in Querrichtung zur Flussrichtung Schallwellen AW erzeugt, welche sich quer zu der Flussrichtung des Fließpassagenabschnitts F4 der Fließpassage F des Mikrofluidkanalsystems 1 ausbreiten. Infolge des durch die Schallwellen AW entstehenden Drucks in Querrichtung des Fließpassagenabschnitts F4 werden vermehrt weiße Blutkörperchen WBC aus dem dezentrierten Zentralstrom ZS in einen der ersten und zweiten Mantelströme MS1, MS2 transferiert. Die Schallwellen AW bilden stehende Wellen aus, deren Wellenknoten in z-Richtung derart positioniert sind, dass sie in z-Richtung betrachtet, auf der Höhe bzw. in einer Beobachtungsebene, welche durch einen Beobachtungsbereich BA eines stromabwärts angeordneten Mikroskops M verläuft, angeordnet sind. Bei einem Schritt 6.VI passieren die weißen Blutkörperchen WBC eine Längsposition B des Mikrofluidkanalsystems 1, an der ein Mikroskop M angeordnet ist. Die in z-Richtung in dem Beobachtungsbereich BA des Mikroskops M positionierten weißen Blutkörperchen WBC werden nun mit dem Mikroskop M beobachtet. Nach der Beobachtung werden die weißen Blutkörperchen WBC bei einem Schritt 6.VII in einer Sammeleinheit S3 gesammelt und anschließend bei einem Schritt 6.VIII in Tropfenform für weitere Analysen auf einen Objektträger OT ausgegeben.

Es wird abschließend noch einmal darauf hingewiesen, dass es sich bei den vorbeschriebenen Verfahren und Vorrichtungen lediglich um bevorzugte Ausführungsbeispiele der Erfindung handelt und dass die Erfindung vom Fachmann variiert werden kann, ohne den Bereich der Erfindung zu verlassen, soweit er durch die Ansprüche vorgegeben ist. Beispielsweise wurde die Mikrofluidkanalanordnung 1 im Zusammenhang mit der Beobachtung und Analyse von weißen Blutkörperchen WBC beschrieben. Allerdings ist die Erfindung nicht auf die Separation und Beobachtung von weißen Blutkörperchen WBC beschränkt, sondern kann auch auf andere Blutzellen oder auch andere Flüssigkeiten als Blut und in diesen Flüssigkeiten auftretende Partikel angewandt werden. Es wird der Vollständigkeit halber auch darauf hingewiesen, dass die Verwendung der unbestimmten Artikel "ein" bzw. "eine" nicht ausschließt, dass die betreffenden Merkmale auch mehrfach vorhanden sein können. Ebenso schließt der Begriff "Einheit" nicht aus, dass diese aus mehreren Komponenten besteht, die gegebenenfalls auch räumlich verteilt sein können.

## Patentansprüche

1. Vorrichtung (1, 2) zur Untersuchung von Partikeln (WBC, RBC, PLT) in einer zu untersuchenden Flüssigkeit (BL), aufweisend eine Prozessstufe (S2) zum Trennen und Positionieren der zu untersuchenden Partikel (WBC, RBD, PLT), welche umfasst:
- eine Fließpassage (F), durch die die zu untersuchende Flüssigkeit (BL) mit einer ersten Flussrate (vₛ) hindurchbewegt wird, mit mindestens einem Einlass (E3, E4), durch den mindestens eine Mantelflüssigkeit (PF1, PF2) mit mindestens einer zweiten Flussrate (v₃, v₄) in die erste Fließpassage (F) strömt, derart, dass die mindestens eine Mantelflüssigkeit (PF1, PF2) mindestens einen Mantelstrom (MS1, MS2) in der Fließpassage (F) ausbildet und die zu untersuchende Flüssigkeit (BL) längs zu dem mindestens einen Mantelstrom (MS1, MS2) durch die Fließpassage (F) fließt,
- eine Wellenerzeugungseinrichtung (WE2) zur piezoakustischen Erzeugung von Schallwellen (AW), welche sich transversal zur Fließrichtung der zu untersuchenden Flüssigkeit (BL) durch die Fließpassage (F) ausbreiten und Wellenknoten (KN) in einer Beobachtungsebene (BA) ausbilden, so dass aufgrund der Druckwirkung der Schallwellen (AW) in Transversalrichtung zu untersuchende Partikel (WBC, PLT, RBC) der zu untersuchenden Flüssigkeit (BL) transversal in die Beobachtungsebene (BA) verschoben werden und dort angereichert werden,
wobei der Wert der mindestens einen zweiten Flussrate (v₃, v₄) derart gewählt ist, dass der mindestens eine Mantelstrom (MS1, MS2) einen vorbestimmten Querschnitt aufweist, so dass die Beobachtungsebene (BA) durch den mindestens einen Mantelstrom (MS1, MS2) verläuft und die zu untersuchenden Partikel (WBC, PLT, RBC) in der mindestens einen Mantelflüssigkeit (PF1, PF2) angereichert werden,
wobei die Vorrichtung durch Anordnung von der Wellenerzeugungseinrichtung (WE2) gegenüberliegenden Reflexionselementen zur Ausbildung von stehenden Wellen eingerichtet ist, die Vorrichtung weiter umfassend Antriebselemente zum Erzeugen der einzelnen Flüsse der mindestens einen Mantelflüssigkeit (PF1, PF2) sowie der zu untersuchenden Flüssigkeit (BL), die Vorrichtung weiter umfassend eine Steuereinheit zur Wahl oder Steuerung der Flussraten, wobei die Steuereinheit dazu eingerichtet ist, die Werte für die einzelnen Flussraten vorauszuberechnen und aufeinander abzustimmen und die Antriebselemente zum Erzeugen der einzelnen Flüsse der Mantelflüssigkeiten sowie der zu untersuchenden Flüssigkeit entsprechend den ermittelten Flussraten anzusteuern.

2. Vorrichtung (1, 2) nach Anspruch 1, wobei die Fließpassage (F) einen ersten Einlass (E3) aufweist, durch den eine erste Mantelflüssigkeit (PF1) mit einer zweiten Flussrate (V₃) in die Fließpassage (F) strömt, und einen dem ersten Einlass (E3) gegenüberliegenden zweiten Einlass (E4), durch den eine zweite Mantelflüssigkeit (PF2) mit einer dritten Flussrate (V₄) in die Fließpassage (F) strömt, derart, dass die erste Mantelflüssigkeit (PF1) einen ersten Mantelstrom (MS1) in der Fließpassage (F) ausbildet und die zweite Mantelflüssigkeit (PF2) einen zweiten Mantelstrom (MS2) in der Fließpassage (F) ausbildet und die zu untersuchende Flüssigkeit (BL) zwischen dem ersten Mantelstrom (MS1) und dem zweiten Mantelstrom (MS2) durch die Fließpassage (F) fließt,
wobei der Wert der zweiten Flussrate (V₃) und der dritten Flussrate (V₄) derart gewählt ist, dass die Mantelströme (MS1, MS2) einen vorbestimmten Querschnitt aufweisen, so dass die Beobachtungsebene (BA) durch einen der beiden Mantelströme (MS1, MS2) verläuft.

3. Vorrichtung nach Anspruch 1 oder 2, wobei die Fließpassage (F) derart dimensioniert ist, dass die durch sie fließenden Flüssigkeiten (BL, PF1, PF2) laminar fließen, und/oder die Fließpassage (F) einen Mikrofluidkanal (MFK) umfasst.

4. Vorrichtung nach einem der Ansprüche 1 bis 3, wobei die zu untersuchende Flüssigkeit (BL) Blutflüssigkeit umfasst und/oder die zu untersuchenden Partikel (WBC, RBC, PLT) der zu untersuchenden Flüssigkeit (BL) mindestens eine der folgenden Blutbestandteile aufweisen:
- Leukozyten,
- Thrombozyten
- Erythrozyten.

5. Vorrichtung nach einem der Ansprüche 1 bis 4, aufweisend eine der Prozessstufe (S2) vorgeschaltete Trennstufe (S1), wobei die Trennstufe (S1) umfasst:
- eine Fließpassage (F1) mit einem Zentralstrom (ZS) mit einer zunächst von den zu untersuchenden Partikeln (WBC, RBC, PLT) freien Flüssigkeit (PF), und mindestens einem Trennstufen-Mantelstrom (MS), welcher längs dem Zentralstrom (ZS) durch die Fließpassage (F1) der Trennstufe (S1) fließt und die zu untersuchende Flüssigkeit (BL) aufweist,
- eine zusätzliche Wellenerzeugungseinrichtung (WE1) zur piezoakustischen Erzeugung von Schallwellen (AW), welche sich transversal zur Fließrichtung der zu untersuchenden Flüssigkeit (BL) durch die Fließpassage (F1) der Trennstufe (S1) ausbreiten und einen Wellenknoten (KN) in einer Ebene durch den Zentralstrom (ZS) ausbilden, so dass aufgrund der Druckwirkung der Schallwellen (AW) in Transversalrichtung Partikel (WBC, PLT) der zu untersuchenden Flüssigkeit (BL) in den Zentralstrom (ZS) verschoben werden und dort angereichert werden.

6. Vorrichtung nach Anspruch 5, wobei der mindestens eine Trennstufen-Mantelstrom (MS) den Zentralstrom (ZS) in Transversalrichtung zur Fließrichtung umgibt und/oder die von den zu untersuchenden Partikeln (WBC, RBC, PLT) zunächst freie Flüssigkeit (PF) transparent ist.

7. Vorrichtung nach Anspruch 5 oder 6, wobei die Wellenerzeugungseinrichtungen (WE1, WE2) derart ausgebildet sind, dass die Ausbreitungsrichtung der Schallwellen (AW) in der Trennstufe (S1) und die Ausbreitungsrichtung der Schallwellen (AW) in der Prozessstufe (S2) zueinander orthogonal und orthogonal zur Fließrichtung der zu untersuchenden Flüssigkeit (BL) verlaufen.

8. Vorrichtung nach einem der Ansprüche 2 bis 7, wobei sich die Fließpassage (F3) der Prozessstufe (S2) vor der Längsposition der Wellenerzeugungseinrichtung (WE2) der Prozessstufe (S2) quer zur Fließrichtung aufweitet, so dass die Fließgeschwindigkeit der zu untersuchenden Flüssigkeit (BL) und der mindestens einen Mantelflüssigkeit (PF1, PF2) reduziert sind.

9. Vorrichtung nach einem der Ansprüche 1 bis 8, aufweisend eine Pufferzugabeeinheit zur Zugabe eines Puffers zur hypotonischen Lösung in den Zentralstrom (ZS) oder die zu untersuchende Flüssigkeit (BL).

10. Vorrichtung nach einem der Ansprüche 1 bis 9, aufweisend eine Einheit, welche vorzugsweise mit dem zweiten Einlass (E4) in Verbindung steht, zur Zugabe von Markern für die zu untersuchenden Partikel (WBC, RBC, PLT), so dass die zweite Mantelflüssigkeit (PF2) die Marker umfasst.

11. Vorrichtung zur mikroskopischen Beobachtung von Partikeln (RBC, WBC) in einer zu untersuchenden Flüssigkeit, umfassend:
- eine Vorrichtung (1, 2) nach einem der Ansprüche 1 bis 10,
- ein Mikroskop (M), welches an einer Längsposition der Fließpassage (F) der Prozessstufe (S2) angeordnet ist, zur Beobachtung von Partikeln (WBC, RBC, PLT) der zu untersuchenden Flüssigkeit in der Beobachtungsebene (BA).

12. Vorrichtung nach einem Anspruch 11, ferner aufweisend:
- eine Sammeleinheit (S3), welche der Prozessstufe (S2) nachgeschaltet, stromabwärts der Längsposition des Mikroskops (M) angeordnet ist und dazu eingerichtet ist, die untersuchten Partikel (WBC, RBC, PLT) zu sammeln, um diese mit einer weiteren Untersuchungsmethode, welche eine Anreicherung der untersuchten Partikel (WBC, RBC, PLT) benötigt, vorzugsweise einer molekularbiologischen Messmethode, weiter zu untersuchen, und/oder
- eine Partikeltransfereinrichtung, welche stromabwärts hinter der Längsposition des Mikroskops (M) angeordnet ist und zum Transfer der Partikel (WBC, RBC, PLT) von der Fließpassage (F) auf einen Objektträger (OT) zur weiteren Untersuchung der Partikel (WBC, RBC, PLT) ausgebildet ist.

13. Verfahren zur Untersuchung von Partikeln (RBC, WBC, PLT) in einer zu untersuchenden Flüssigkeit (BL), aufweisend die Schritte:
- Bewegen einer zu untersuchenden Flüssigkeit (BL) mit einer ersten Flussrate (Vₛ) durch eine Fließpassage (F),
- Zuführen mindestens einer Mantelflüssigkeit (PF1, PF2) durch einen ersten Einlass (E3) mit einer zweiten Flussrate (V₃) zu der Fließpassage (F), derart, dass die mindestens eine Mantelflüssigkeit (PF1, PF2) mindestens einen Mantelstrom (MS1, MS2) in der Fließpassage (F) ausbildet und die zu untersuchende Flüssigkeit (BL) längs zu dem mindestens einen Mantelstrom (MS1, MS2) durch die Fließpassage (F) fließt,
- piezoakustisches Erzeugen von Schallwellen (AW), welche sich transversal zur Fließrichtung der zu untersuchenden Flüssigkeit (BL) durch die Fließpassage (F) ausbreiten und Wellenknoten (KN) in einer Beobachtungsebene (BA) ausbilden, so dass aufgrund der Druckwirkung der Schallwellen (AW) in Transversalrichtung zu untersuchende Partikel (WBC, RBC, PLT) der zu untersuchenden Flüssigkeit (BL) transversal in die Beobachtungsebene (BA) verschoben werden und dort angereichert werden,
- Wählen des Werts der mindestens einen zweiten Flussrate (V₃) Flussrate (V₄) derart, dass der mindestens eine Mantelstrom (MS1, MS2) einen vorbestimmten Querschnitt aufweist, so dass die Beobachtungsebene (BA) durch den mindestens einen Mantelstrom (MS1, MS2) verläuft und die zu untersuchenden Partikel (WBC, RBC, PLT) in der mindestens einen Mantelflüssigkeit (PF1, PF2) angereichert werden,
wobei durch Anordnung von der Wellenerzeugungseinrichtung (WE2) gegenüberliegenden Reflexionselementen die Ausbildung von stehenden Wellen erreicht wird,
wobei Antriebselemente die einzelnen Flüsse der mindestens einen Mantelflüssigkeit (PF1, PF2) sowie der zu untersuchenden Flüssigkeit (BL) erzeugen,
wobei eine Steuereinheit zur Wahl oder Steuerung der Flussraten die Werte für die einzelnen Flussraten vorausberechnet und aufeinander abstimmt und die Antriebselemente zum Erzeugen der einzelnen Flüsse der Mantelflüssigkeiten sowie der zu untersuchenden Flüssigkeit entsprechend den ermittelten Flussraten ansteuert.

14. Verwendung einer Vorrichtung (1, 2) nach einem der Ansprüche 1 bis 12 zur Separation von Leukozyten (WBC) aus einer Blutflüssigkeit (BL).

## Claims

1. Apparatus (1, 2) for examining particles (WBC, RBC, PLT) in a liquid (BL) to be examined, having a process stage (S2) for separating and positioning the particles (WBC, RBD, PLT) to be examined, comprising:
- a flow passage (F) through which the liquid (BL) to be examined is moved at a first flow rate (vₛ), comprising at least one inlet (E3, E4), through which at least one sheath liquid (PF1, PF2) flows into the first flow passage (F) at at least one second flow rate (v₃, v₄) such that the at least one sheath liquid (PF1, PF2) forms at least one sheath flow (MS1, MS2) in the flow passage (F) and the liquid (BL) to be examined flows through the flow passage (F) longitudinally in relation to the at least one sheath flow (MS1, MS2),
- a wave-producing device (WE2) for piezo-acoustic production of sound waves (AW) that propagate through the flow passage (F) transversely to the flow direction of the liquid (BL) to be examined and that form wave nodes (KN) in an observation plane (BA) such that, on account of the effect of pressure of the sound waves (AW) in the transversal direction, particles (WBC, PLT, RBC) to be examined of the liquid (BL) to be examined are displaced transversely into the observation plane (BA) and are accumulated there,
wherein the value of the at least one second flow rate (V₃, v₄) is chosen in such a way that the at least one sheath flow (MS1, MS2) has a predetermined cross section such that the observation plane (BA) extends through the at least one sheath flow (MS1, MS2) and the particles (WBC, PLT, RBC) to be examined are accumulated in the at least one sheath liquid (PF1, PF2),
wherein the apparatus is configured to form standing waves by arranging reflection elements opposite to the wave-producing device (WE2),
the apparatus further comprising drive elements for producing the individual flows of the at least one sheath liquid (PF1, PF2) and of the liquid (BL) to be examined,
the apparatus further comprising a control unit for choosing or controlling the flow rates, wherein the control unit is configured to calculate the values for the individual flow rates in advance and match these to one another, and to control the drive elements for producing the individual flows of the sheath liquids and of the liquid to be examined in accordance with the ascertained flow rates.

2. Apparatus (1, 2) according to Claim 1, wherein the flow passage (F) has a first inlet (E3), through which a first sheath liquid (PF1) flows into the flow passage (F) at a second flow rate (V₃), and a second inlet (E4) lying opposite the first inlet (E3), a second sheath liquid (PF2) flowing through said second inlet into the flow passage (F) at a third flow rate (V₄) such that the first sheath liquid (PF1) forms a first sheath flow (MS1) in the flow passage (F) and the second sheath liquid (PF2) forms a second sheath flow (MS2) in the flow passage (F) and the liquid (BL) to be examined flows through the flow passage (F) between the first sheath flow (MS1) and the second sheath flow (MS2),
wherein the value of the second flow rate (V₃) and of the third flow rate (V₄) is chosen in such a way that the sheath flows (MS1, MS2) have a predetermined cross section such that the observation plane (BA) extends through one of the two sheath flows (MS1, MS2).

3. Apparatus according to Claim 1 or 2, wherein the flow passage (F) is dimensioned in such a way that the liquids (BL, PF1, PF2) flowing therethrough exhibit laminar flow, and/or the flow passage (F) comprises a microfluidic channel (MFK).

4. Apparatus according to any one of Claims 1 to 3, wherein the liquid (BL) to be examined comprises blood plasma and/or the particles (WBC, RBC, PLT) to be examined of the liquid (BL) to be examined have at least one of the following blood constituents:
- leukocytes,
- thrombocytes,
- erythrocytes.

5. Apparatus according to any one of Claims 1 to 4, having a separation stage (S1) disposed upstream of the process stage (S2), wherein the separation stage (S1) comprises:
- a flow passage (F1) with a central flow (ZS) with a liquid (PF) that is initially free from the particles (WBC, RBC, PLT) to be examined, and at least one separation stage sheath flow (MS) that flows through the flow passage (F1) of the separation stage (S1) alongside the central flow (ZS) and that has the liquid (BL) to be examined,
- an additional wave-producing device (WE1) for piezo-acoustic production of sound waves (AW) that propagate through the flow passage (F1) of the separation stage (S1) transversely to the flow direction of the liquid (BL) to be examined and that form a wave node (KN) in a plane through the central flow (ZS) such that, on account of the effect of pressure of the sound waves (AW) in the transversal direction, particles (WBC, PLT) of the liquid (BL) to be examined are displaced into the central flow (ZS) and are accumulated there.

6. Apparatus according to Claim 5, wherein the at least one separation stage sheath flow (MS) surrounds the central flow (ZS) in the transversal direction to the flow direction and/or the liquid (PF) that is initially free from the particles (WBC, RBC, PLT) to be examined is transparent.

7. Apparatus according to Claim 5 or 6, wherein the wave-producing devices (WE1, WE2) are embodied in such a way that the propagation direction of the sound waves (AW) in the separation stage (S1) and the propagation direction of the sound waves (AW) in the process stage (S2) extend orthogonal to one another and orthogonal to the flow direction of the liquid (BL) to be examined.

8. Apparatus according to any one of Claims 2 to 7, wherein the flow passage (F3) of the process stage (S2) widens across the flow direction upstream of the longitudinal position of the wave-producing device (WE2) of the process stage (S2) such that the flow speed of the liquid (BL) to be examined and of the at least one sheath liquid (PF1, PF2) is reduced.

9. Apparatus according to any one of Claims 1 to 8, having a buffer addition unit for adding a buffer to the hypotonic solution into the central flow (ZS) or the liquid (BL) to be examined.

10. Apparatus according to any one of Claims 1 to 9, having a unit, which is preferably connected to the second inlet (E4), for the addition of markers for the particles (WBC, RBC, PLT) to be examined such that the second sheath liquid (PF2) comprises the markers.

11. Apparatus for microscopic observation of particles (RBC, WBC) in a liquid to be examined, comprising:
- an apparatus (1, 2) according to any one of Claims 1 to 10,
- a microscope (M), which is arranged at a longitudinal position of the flow passage (F) of the process stage (S2), for observing particles (WBC, RBC, PLT) of the liquid to be examined in the observation plane (BA).

12. Apparatus according to Claim 11, further having:
- a collecting unit (S3) that is arranged downstream of the process stage (S2) and downstream of the longitudinal position of the microscope (M) and is configured to collect the examined particles (WBC, RBC, PLT) in order to examine these further using a further examination method which requires an accumulation of the examined particles (WBC, RBC, PLT), preferably a molecular biological measuring method, and/or
- a particle transfer device that is arranged downstream behind the longitudinal position of the microscope (M) and is embodied to transfer the particles (WBC, RBC, PLT) from the flow passage (F) onto an object carrier (OT) for the further examination of the particles (WBC, RBC, PLT).

13. Method for examining particles (RBC, WBC, PLT) in a liquid (BL) to be examined, having the following steps:
- moving a liquid (BL) to be examined through a flow passage (F) at a first flow rate (Vₛ),
- supplying at least one sheath liquid (PF1, PF2) to the flow passage (F) through a first inlet (E3) at a second flow rate (V₃) in such a way that the at least one sheath liquid (PF1, PF2) forms at least one sheath flow (MS1, MS2) in the flow passage (F) and the liquid (BL) to be examined flows through the flow passage (F) longitudinally in relation to the at least one sheath flow (MS1, MS2),
- piezo-acoustically producing sound waves (AW) that propagate through the flow passage (F) transversely to the flow direction of the liquid (BL) to be examined and that form wave nodes (KN) in an observation plane (BA) such that, on account of the effect of pressure of the sound waves (AW) in the transversal direction, particles (WBC, RBC, PLT) to be examined of the liquid (BL) to be examined are displaced transversely into the observation plane (BA) and are accumulated there,
- choosing the value of the at least one second flow rate (V₃) flow rate (V₄) in such a way that the at least one sheath flow (MS1, MS2) has a predetermined cross section such that the observation plane (BA) extends through the at least one sheath flow (MS1, MS2) and the particles (WBC, RBC, PLT) to be examined are accumulated in the at least one sheath liquid (PF1, PF2).
wherein the formation of standing waves is achieved by arranging reflection elements opposite to the wave-producing device (WE2),
wherein drive elements produce the individual flows of the at least one sheath liquid (PF1, PF2) and of the liquid (BL) to be examined,
wherein a control unit for choosing or controlling the flow rates calculates the values for the individual flow rates in advance and matches these to one another, and controls the drive elements for producing the individual flows of the sheath liquids and of the liquid to be examined in accordance with the ascertained flow rates.

14. Use of an apparatus (1, 2) according to any one of Claims 1 to 12 for separating leukocytes (WBC) from a blood plasma (BL) .

## Revendications

1. Installation (1, 2) d'examen de particules (WBC, RBC, PLT) dans un liquide (BL) à examiner, comportant un étage (S2) de traitement pour la séparation et la mise en position des particules (WBC, RBD, PLT) à examiner, qui comprend :
- un passage (F) d'écoulement, dans lequel on déplace le liquide (BL) à examiner à un premier débit (vₛ), comprenant au moins une entrée (E3, E4), par laquelle au moins un liquide (PF1, PF2) enveloppe s'écoule dans le premier passage (F) d'écoulement à au moins un deuxième débit (v₃, v₄), de manière à ce que le au moins un liquide (PF1, PF2) enveloppe forme au moins un courant (MS1, MS2) enveloppe dans le passage (F) d'écoulement et de manière à ce que le liquide (BL) à examiner s'écoule dans le passage (F) d'écoulement le long du au moins un courant (MS1, MS2) enveloppe,
- un dispositif (WE2) de production d'ondes pour la production piézoacoustique d'ondes (AW) acoustiques, qui se propagent dans le passage (F) d'écoulement transversalement au sens d'écoulement du liquide (BL) à examiner et qui forment des noeuds (KN) d'onde dans un plan (BA) d'observation, de manière à ce que, en raison de l'effet de pression des ondes (AW) acoustiques dans la direction transversale, des particules (WBC, PLT, RBC) à examiner du liquide (BL) à examiner soient déplacées transversalement dans le plan (BA) d'observation et l'en enrichissent,
dans lequel la valeur du au moins un deuxième débit (V₃, v₄) est choisie, de manière à ce que le au moins un courant (MS1, MS2) enveloppe ait une section transversale définie à l'avance, de sorte que le plan (BA) d'observation passe par le au moins un courant (MS1, MS2) enveloppe et que le au moins un liquide (PF1, PF2) enveloppe s'enrichisse en particules (WBC, PLT, RBC) à examiner,
dans lequel l'installation est conçue, par le montage d'éléments de réflexion faisant face au dispositif (WE2) de production d'ondes, pour la formation d'ondes stationnaires,
l'installation comprenant en outre des éléments d'entraînement, pour la production des divers écoulements du au moins un liquide (PF1, PF2) enveloppe, ainsi que du liquide (BL) à examiner, l'installation comprenant en outre une unité de commande pour le choix ou la commande des débits, dans laquelle l'unité de commande est conçue pour calculer à l'avance les valeurs des divers débits et les accorder les uns aux autres, et pour commander les éléments d'entraînement pour la production des divers écoulements des liquides enveloppes, ainsi que du liquide à examiner, conformément aux débits déterminés.

2. Installation (1, 2) suivant la revendication 1, dans laquelle le passage (F) d'écoulement a une première entrée (E3), par laquelle un premier liquide (PF1) enveloppe s'écoule à un deuxième débit (V₃) dans le passage (F) d'écoulement, et une deuxième entrée (E4) faisant face à la première entrée (E3), par laquelle un deuxième liquide (PF2) enveloppe s'écoule à un troisième débit (V₄) dans le passage (F) d'écoulement, de manière à ce que le premier liquide (PF1) enveloppe forme un premier courant (MS1) enveloppe dans le passage (F) d'écoulement et de manière à ce que le deuxième liquide (PF2) enveloppe forme un deuxième courant (MS2) enveloppe dans le passage (F) d'écoulement et de manière à ce que le liquide (BL) à examiner s'écoule dans le passage (F) d'écoulement entre le premier courant (MS1) enveloppe et le deuxième courant (MS2) enveloppe,
dans laquelle la valeur du deuxième débit (V₃) et du troisième débit (V₄) est choisie de manière à ce que les courants (MS1, MS2) enveloppes aient une section transversale définie à l'avance, de sorte que le plan (BA) d'observation passe par l'un des deux courants (MS1, MS2) enveloppes.

3. Installation suivant la revendication 1 ou 2, dans laquelle le passage (F) d'écoulement a des dimensions telles que les liquides (BL, PF1, PF2), qui s'y écoulent, s'écoulent de manière laminaire et/ou le passage (F) d'écoulement comprend un conduit (MFK) de microfluide.

4. Installation suivant l'une des revendications 1 à 3, dans laquelle le liquide (BL) à examiner comprend du liquide sanguin et/ou les particules (WBC, RBC, PLT) à examiner du liquide (BL) à examiner ont au moins l'un des constituants suivants du sang :
- des leucocytes,
- des thrombocytes,
- des érythrocytes.

5. Installation suivant l'une des revendications 1 à 4, comportant un étage (S1) de séparation en amont de l'étage (S2) de traitement, dans laquelle l'étage (S1) de séparation comprend :
- un passage (F1) d'écoulement, comprenant un courant (ZS) central ayant un liquide (PF) d'abord exempt des particules (WBC, RBC, PLT) à examiner et au moins un courant (MS) enveloppe d'étage de séparation, qui s'écoule dans le passage (F1) d'écoulement de l'étage (S1) de séparation le long du courant (ZS) central et qui a le liquide (BL) à examiner,
- un dispositif (WE1) supplémentaire de production d'ondes pour la production piézoacoustique d'ondes (AW) acoustiques, qui se propagent, dans le passage (F1) d'écoulement de l'étage (S1) de séparation, transversalement au sens d'écoulement du liquide (BL) à examiner, et qui forment un noeud (KN) d'ondes dans un plan passant par le courant (ZS) central, de sorte que, en raison de l'effet de la pression des ondes (AW) acoustiques dans la direction transversale, des particules (WBC, PLT) du liquide (BL) à examiner sont déplacées dans le courant (ZS) central et l'en enrichissent.

6. Installation suivant la revendication 5, dans laquelle le au moins un courant (MS) enveloppe d'étage de séparation entoure le courant (ZS) central dans la direction transversale au sens d'écoulement et/ou le liquide (PF), d'abord exempt des particules (WBS, RBC, PLT) à examiner, est transparent.

7. Installation suivant la revendication 5 ou 6, dans laquelle les dispositifs (WE1, WE2) de production d'ondes sont formés, de manière à ce que le sens de propagation des ondes (AW) acoustiques dans l'étage (S1) de séparation et le sens de propagation des ondes (AW) acoustiques dans l'étage (S2) de traitement soient orthogonaux l'un par rapport à l'autre et orthogonaux au sens d'écoulement du liquide (BL) à examiner.

8. Installation suivant l'une des revendications 2 à 7, dans laquelle le passage (F3) de l'étage (S2) de traitement s'élargit transversalement au sens d'écoulement avant la position longitudinale du dispositif (WE2) de production d'ondes de l'étage (S2) de traitement, de manière à réduire la vitesse d'écoulement du liquide (BL) à examiner et du au moins liquide (PF1, PF2) enveloppe.

9. Installation suivant l'une des revendications 1 à 8, comportant une unité d'addition de tampon pour l'addition d'un tampon à la solution hypotonique dans le courant (ZS) central ou dans le liquide (BL) à examiner.

10. Installation suivant l'une des revendications 1 à 9, comportant une unité qui, de préférence, communique avec la deuxième entrée (E4) pour l'addition de marqueurs des particules (WBC, RBC, PLT) à examiner, de manière à ce que le deuxième liquide (PF2) enveloppe comprenne les marqueurs.

11. Installation d'observation microscopique de particules (RBC, WBC) dans un liquide à examiner, comprenant :
- une installation (1, 2) suivant l'une des revendications 1 à 10,
- un microscope (M), qui est disposé en une position longitudinale du passage (F) d'écoulement de l'étage (S2) de traitement, pour l'observation de particules (WBC, RBC, PLT) du liquide à examiner dans le plan (BA) d'observation.

12. Installation suivant la revendication 11, comportant en outre :
- une unité (S3) de collecte, qui est disposée après l'étage (S2) de traitement, en aval de la position longitudinale du microscope (M), et qui est conçue pour collecter les particules (WBC, RBC, PLT) examinées, afin de les examiner davantage par un autre procédé d'examen, qui nécessite un enrichissement en les particules (WBC, RBC, PLT) examinées, de préférence par un procédé de mesure de biologie moléculaire, et/ou
- un dispositif de transfert de particules, qui est disposé en aval derrière la position longitudinale du microscope (M), et qui est constitué pour le transfert des particules (WBC, RBC, PLT) du passage (F) d'écoulement à un porte objet (OT) pour l'examen ultérieur des particules (WBC, RBC, PLT).

13. Procédé d'examen de particules (RBC, WBC, PLT) dans un liquide (BL) à examiner, comportant les stades :
- on déplace un liquide (BL) à examiner à un premier débit (Vₛ) dans un passage (F) d'écoulement,
- on envoie au moins un liquide (PF1, PF2) enveloppe par une première entrée (E3) à un deuxième débit (V₃) dans le passage (F) d'écoulement de manière à ce que le au moins un liquide (PF1, PF2) enveloppe forme au moins un courant (MS1, MS2) enveloppe dans le passage (F) d'écoulement, et de manière à ce que le liquide (BL) à examiner s'écoule dans le passage (F) d'écoulement, le long du au moins un courant (MS1, MS2) enveloppe,
- on produit, de manière piézoacoustique, des ondes (AW) acoustiques, qui se propagent dans le passage (F) d'écoulement transversalement au sens d'écoulement du liquide (BL) à examiner et qui forment des noeuds (KN) d'ondes dans un plan (BA) d'observation, de manière à ce que, en raison de l'effet de pression des ondes (AW) acoustiques dans la direction transversale, des particules (WBC, RBC, PLT) à examiner soient déplacées dans le plan (BA) d'observation transversalement au liquide (BL) à examiner et l'en enrichissent,
- on choisit la valeur du au moins un deuxième débit (V₃), débit (V₄), de manière à ce que le au moins un courant (MS1, MS2) enveloppe ait une section transversale définie à l'avance, de sorte que le plan (BA) d'observation passe par le au moins un courant (MS1, MS2) enveloppe et que le au moins un liquide (PF1, PF2) enveloppe s'enrichisse en particules (WBC, PLT, RBC) à examiner,
dans lequel, par le montage d'éléments de réflexion en face des dispositifs (WE2) de production d'ondes, on obtient la formation d'ondes stationnaires,
dans lequel des éléments d'entraînement produisent les divers écoulement du au moins un liquide (PF1, PF2) enveloppe, ainsi que du liquide (BL) à examiner,
dans lequel une unité de commande de sélection ou de commande des débits calcule à l'avance les valeurs des divers débits et les accorde les uns aux autres, et commande, conformément aux débits déterminés, les éléments d'entraînement pour la production des divers débits des liquides enveloppes ainsi que du liquide à examiner.

14. Utilisation d'une installation (1, 2) suivant l'une des revendications 1 à 12, pour la séparation de leucocytes (WBC) d'un liquide (BL) sanguin.
